# EUROPEAN PATENT APPLICATION

(11) **EP 4 737 253 A1**
(43) Date of publication of application: **06.05.2026**
(21) Application number: 24830433.9
(22) Date of filing: 05.06.2024
(51) Int. Cl.: B60W 60/00, H04W 4/44

(54) **DATA PROCESSING METHOD AND APPARATUS, AND VEHICLE**

(30) Priority: 29.06.2023 CN 202310792509
(71) Applicant: Shenzhen Yinwang Intelligent Technologies Co., Ltd., Shenzhen, Guangdong 518110 (CN)
(72) Inventor: GUAN, Gaoyang, Shenzhen, Guangdong 518129 (CN); WANG, Qiangdong, Shenzhen, Guangdong 518129 (CN); CHEN, Ruining, Shenzhen, Guangdong 518129 (CN)
(74) Representative: Gill Jennings & Every LLP
(86) International application number: PCT/CN2024/097457
(87) International publication number: WO 2025/001786

(57) **Abstract**

This application provides a data processing method and apparatus, and a vehicle, and may be applied to the field of intelligent driving. The data processing method includes: obtaining first environment information around a vehicle and first status information of the vehicle; sending the first environment information and the first status information to a cloud server; receiving first latency optimization configuration information sent by the cloud server, where the cloud server stores a mapping relationship between the first environment information, the first status information, and the first latency optimization configuration information, and the first latency optimization configuration information includes a first latency optimization parameter for a processing unit in the vehicle to process data collected by a sensor; and processing, based on the first latency optimization parameter, first data collected by the sensor. Embodiments of this application may be applied to an intelligent vehicle or a new energy vehicle, to help reduce an end-to-end latency, thereby helping ensure driving safety of users.

## Description

This application claims priority to Chinese Patent Application No. 202310792509.3, filed with the China National Intellectual Property Administration on June 29, 2023 and entitled "DATA PROCESSING METHOD AND APPARATUS, AND VEHICLE", which is incorporated herein by reference in its entirety.

### TECHNICAL FIELD

This application relates to the field of intelligent driving, and more specifically, to a data processing method and apparatus, and a vehicle.

### BACKGROUND

In recent years, with rapid and vigorous development of autonomous driving artificial intelligence (artificial intelligence, AI) algorithms and technologies, numerous traditional automakers and emerging autonomous driving players have embarked on developing advanced L4 fully automated driving systems and applications. However, people are concerned about implementation of the autonomous driving technology, and one of the most concerned problems is whether the autonomous driving technology can ensure safety of other vehicles and pedestrians. A very important indicator for measuring safety is an end-to-end latency of a data flow link of the automated driving system, for example, a latency from a moment at which a sensor like a lidar or a camera collects an original signal to a moment at which a brake instruction is sent to a chassis domain controller. A low end-to-end latency (for example, less than 100 ms) can greatly improve a safety coefficient of vehicles and pedestrians, and is one of key objectives for subsequent optimization of systems and applications.

Therefore, how to reduce the end-to-end latency becomes an urgent problem to be resolved.

### SUMMARY

This application provides a data processing method and apparatus, and a vehicle, to help reduce an end-to-end latency, thereby helping ensure driving safety of users.

According to a first aspect, this application provides a data processing method, where the method includes: obtaining first environment information around a vehicle and first status information of the vehicle; sending the first environment information and the first status information to a cloud server; receiving first latency optimization configuration information sent by the cloud server, where the cloud server stores a mapping relationship between the first environment information, the first status information, and the first latency optimization configuration information, and the first latency optimization configuration information includes a first latency optimization parameter for a processing unit in the vehicle to process data collected by a sensor; and processing, based on the first latency optimization parameter, first data collected by the sensor.

Based on the foregoing technical solution, the cloud server can send corresponding latency optimization configuration information to the vehicle based on environment information around the vehicle, the status information of the vehicle, and a mapping relationship. In this way, the vehicle can obtain appropriate latency optimization configuration information in a current scenario from the cloud server. This helps reduce a latency of processing, by the processing unit in the vehicle, the data collected by the sensor, thereby helping reduce an end-to-end latency and helping ensure driving safety of users.

The mapping relationship stored in the cloud server may be a mapping relationship between environment information, status information, and latency optimization configuration information in different scenarios.

Currently, an end-to-end latency optimization configuration is basically performed offline based on engineers' experience for some common environments, and is difficult to perform adaptive dynamic adjustment for different scenarios during traveling of the vehicle. In addition, an end-to-end latency optimization configuration adjustment process is currently time-consuming. In this embodiment of this application, latency optimization configuration information for different scenarios is deployed in advance in the cloud server, so that the vehicle can obtain appropriate latency optimization configuration information in the different scenarios. In addition, a manner in which the cloud server determines appropriate latency optimization configuration information in a current scenario of the vehicle based on a mapping relationship can reduce waiting duration for the vehicle to obtain the latency optimization configuration information.

In some possible implementations, the first latency optimization parameter includes one or more of a priority parameter of a task in the processing unit, a core binding parameter, and a scheduling parameter of a scheduler in an operating system.

In some possible implementations, the first latency optimization configuration information includes an end-to-end latency optimization parameter, and the end-to-end latency is an end-to-end latency of a data flow link of an automated driving system in the vehicle, for example, a latency from a moment at which the sensor (for example, a camera or a lidar) collects raw data to a moment at which a vehicle control instruction is sent to a controller (for example, a chassis controller) of the vehicle.

The end-to-end latency may include the latency of processing, by the processing unit, the data collected by the sensor.

In some possible implementations, the first environment information includes at least one of time, a geographical location, climate, and a road condition.

In some possible implementations, the first status information includes at least one of a hardware specification, a system status, and an autonomous driving status of the vehicle.

In some possible implementations, the vehicle is a vehicle in an autonomous driving status.

With reference to the first aspect, in a possible implementation of the first aspect, the method further includes: obtaining second environment information around the vehicle and second status information of the vehicle when a latency of processing, by the processing unit based on the first latency optimization parameter, the data collected by the sensor is greater than or equal to a latency threshold; sending the second environment information and the second status information to the cloud server; receiving second latency optimization configuration information sent by the cloud server, where the cloud server stores a mapping relationship between the second environment information, the second status information, and the second latency optimization configuration information, and the second latency optimization configuration information includes a second latency optimization parameter for the processing unit to process data collected by the sensor; and processing, based on the second latency optimization parameter, second data collected by the sensor.

Based on the foregoing technical solution, during traveling of the vehicle, when the latency of processing, by the processing unit, the data collected by the sensor is greater than or equal to the latency threshold, the vehicle can send the second environment information around the vehicle and the second status information of the vehicle to the cloud server. The cloud server may send the updated latency optimization configuration information to the vehicle based on the mapping relationship. In this way, the vehicle can adaptively adjust the latency optimization configuration information during traveling, to implement an automatic online performance optimization effect. This helps reduce the end-to-end latency, and helps ensure driving safety of the users. In addition, when the vehicle adjusts the deployed latency optimization configuration information, there is no need for participation of existing autonomous driving application developers, such as modifying code or recompiling.

During traveling, the vehicle may be dynamically aware of performance deterioration caused by a scenario change, and extract environment information and status information of the vehicle within a current time window. The cloud server determines, based on a changed scenario of the vehicle, latency optimization configuration information suitable for the changed scenario.

In some possible implementations, the second environment information around the vehicle and the second status information of the vehicle are obtained when the latency of processing, by the processing unit based on the first latency optimization parameter, the data collected by the sensor is greater than or equal to a first latency threshold or less than or equal to a second latency threshold, where the second latency threshold is less than the first latency threshold.

Alternatively, the second environment information around the vehicle and the second status information of the vehicle are obtained when the latency of processing, by the processing unit based on the first latency optimization parameter, the data collected by the sensor is not within a latency range.

In some possible implementations, the first latency optimization configuration information includes the latency threshold or the latency range.

Based on the foregoing technical solution, the vehicle can obtain the latency range based on the first latency optimization configuration information sent by the cloud server, to monitor in real time a relationship between the latency of processing, by the processing unit, the data collected by the sensor and the latency range. When the latency is not within the latency range, new latency optimization configuration information may be requested from the cloud server again, to avoid a safety risk caused by deterioration of the end-to-end latency.

With reference to the first aspect, in a possible implementation of the first aspect, the processing unit includes a primary processing unit and a secondary processing unit; and processing, based on the first latency optimization parameter, the first data collected by the sensor includes: deploying the first latency optimization parameter on the secondary processing unit; and deploying the first latency optimization parameter on the primary processing unit when, in a first time period, a latency of processing the first data by the secondary processing unit based on the first latency optimization parameter is less than a latency of processing the first data by the primary processing unit.

Based on the foregoing technical solution, the first latency optimization parameter is first deployed in the secondary processing unit, so that validity of the first latency optimization parameter can be verified in advance, and normal traveling of the vehicle is not affected.

With reference to the first aspect, in a possible implementation of the first aspect, before deploying the first latency optimization parameter on the primary processing unit, the method further includes: determining that vehicle control instructions output by the secondary processing unit and the primary processing unit are the same in the first time period.

Based on the foregoing technical solution, before the first latency optimization parameter is deployed in the primary processing unit, it may be determined that the vehicle control instructions output by the secondary processing unit and the primary processing unit are the same in the first time period. This helps improve validity of verifying the first latency optimization configuration information.

With reference to the first aspect, in a possible implementation of the first aspect, the first environment information includes environment information around the vehicle at a plurality of future moments, and the first status information includes status information of the vehicle at the plurality of future moments; and the first latency configuration information includes a latency optimization parameter for the processing unit to process, at the plurality of future moments, data collected by the sensor.

Based on the foregoing technical solution, the vehicle can obtain latency configuration parameters at the plurality of future moments in advance. This avoids a process in which the vehicle frequently interacts with the cloud server in a future period of time, and helps reduce waiting duration for the vehicle to obtain latency optimization configuration information.

In some possible implementations, the method includes: The vehicle sends navigation information to the cloud server, and the cloud server determines environment information and status information of the vehicle at the plurality of future moments based on the navigation information, to send, to the vehicle, latency optimization parameters for the processing unit to process, at the plurality of future moments, the data collected by the sensor.

According to a second aspect, a data processing method is provided, where the method includes: obtaining first environment information around a vehicle and first status information of the vehicle; and determining first latency optimization configuration information based on the first environment information, the first status information, and a mapping relationship, where the mapping relationship includes a mapping relationship between the first environment information, the first status information, and the first latency optimization configuration information, and the first latency optimization configuration information includes a first latency optimization parameter for a processing unit in the vehicle to process data collected by a sensor; and processing, based on the first latency optimization parameter, first data collected by the sensor.

Based on the foregoing technical solution, the vehicle can determine appropriate latency optimization configuration information in a current scenario based on the mapping relationship stored in the vehicle. This helps reduce a latency of processing, by the processing unit in the vehicle, the data collected by the sensor, thereby helping reduce an end-to-end latency and helping ensure driving safety of users.

With reference to the second aspect, in a possible implementation of the second aspect, the method further includes: obtaining second environment information around the vehicle and second status information of the vehicle when a latency of processing, by the processing unit based on the first latency optimization parameter, the data collected by the sensor is greater than or equal to a latency threshold; determining second latency optimization configuration information based on the second environment information, the second status information, and a mapping relationship, where the mapping relationship includes a mapping relationship between the second environment information, the second status information, and the second latency optimization configuration information, and the second latency optimization configuration information includes a second latency optimization parameter for the processing unit to process data collected by the sensor; and processing, based on the second latency optimization parameter, second data collected by the sensor.

Based on the foregoing technical solution, during traveling of the vehicle, when the latency of processing, by the processing unit, the data collected by the sensor is greater than or equal to the latency threshold, the vehicle can re-determine updated latency optimization configuration information based on the second environment information around the vehicle, the second status information of the vehicle, and the mapping relationship. In this way, the vehicle can adaptively adjust the latency optimization configuration information during traveling, to implement an automatic online performance optimization effect. This helps reduce the end-to-end latency, and helps ensure driving safety of the users.

With reference to the second aspect, in a possible implementation of the second aspect, the processing unit includes a primary processing unit and a secondary processing unit; and processing, based on the first latency optimization parameter, the first data collected by the sensor includes: deploying the first latency optimization parameter on the secondary processing unit; and deploying the first latency optimization parameter on the primary processing unit when, in a first time period, a latency of processing the first data by the secondary processing unit based on the first latency optimization parameter is less than a latency of processing the first data by the primary processing unit.

With reference to the second aspect, in a possible implementation of the second aspect, before deploying the first latency optimization parameter on the primary processing unit, the method further includes: determining that vehicle control instructions output by the secondary processing unit and the primary processing unit are the same in the first time period.

With reference to the second aspect, in a possible implementation of the second aspect, the first environment information includes environment information around the vehicle at a plurality of future moments, and the first status information includes status information of the vehicle at the plurality of future moments; and the first latency configuration information includes a latency optimization parameter for processing, at the plurality of future moments, data collected by the sensor.

According to a third aspect, this application provides a data processing method, where the method includes: obtaining first environment information around a vehicle and first status information of the vehicle; and sending first latency optimization configuration information to the vehicle based on the first environment information, the first status information, and a mapping relationship, where the mapping relationship includes a mapping relationship between environment information, status information, and latency optimization configuration information, and the first latency optimization configuration information includes a first latency optimization parameter for a processing unit in the vehicle to process data collected by a sensor.

Based on the foregoing technical solution, a cloud server can send corresponding latency optimization configuration information to the vehicle based on the environment information around the vehicle, the status information of the vehicle, and the mapping relationship. In this way, the vehicle can obtain appropriate latency optimization configuration information in a current scenario from the cloud server. This helps reduce a latency of processing, by the processing unit in the vehicle, the data collected by the sensor, thereby helping reduce an end-to-end latency and helping ensure driving safety of users.

With reference to the third aspect, in a possible implementation of the third aspect, the first environment information includes environment information around the vehicle at a plurality of future moments, and the first status information includes status information of the vehicle at the plurality of future moments; and the first latency optimization configuration information includes a latency optimization parameter for processing, at the plurality of future moments, data collected by the sensor.

With reference to the third aspect, in a possible implementation of the third aspect, the method further includes: retrieving the mapping relationship based on the first environment information, the first status information, and a hierarchical navigable small world (hierarchical navigable small world graphs, HNSW) algorithm, to obtain the first latency optimization configuration information.

Based on the foregoing technical solution, the cloud server may retrieve the mapping relationship based on the HNSW algorithm, to obtain the first latency optimization configuration information. This helps reduce a latency of the cloud server in searching for, based on information sent by the vehicle, latency optimization configuration information corresponding to the information sent by the vehicle.

With reference to the third aspect, in a possible implementation of the third aspect, before obtaining the first environment information around the vehicle and the first status information of the vehicle, the method further includes: obtaining third environment information around an autonomous vehicle and third status information of the autonomous vehicle; determining, based on a third latency optimization parameter set by an offline simulation system, the third environment information, and the third status information, a first latency of processing data collected by a sensor; updating the third latency optimization parameter based on the first latency, to obtain a fourth latency optimization parameter; and storing, in the mapping relationship, a correspondence between the third environment information, the third status information, and the fourth latency optimization parameter.

Based on the foregoing technical solution, an initial latency optimization parameter is set by the offline simulation system, so that an end-to-end latency during actual running of the offline simulation system is viewed and optimization is performed. In this way, an end-to-end latency calculation method is more accurate and does not require additional simulation verification.

With reference to the third aspect, in a possible implementation of the third aspect, before obtaining the first environment information around the vehicle and the first status information of the vehicle, the method further includes: obtaining third environment information around an autonomous vehicle and third status information of the autonomous vehicle; extracting latency model data based on the third environment information and the third status information, where the latency model data includes one or more of a quantity of threads of an application, periodic data of a thread, temporal probability distribution of thread execution, and a dependency relationship between thread data; inputting the latency model data into a latency simulator to obtain a second latency; determining, based on the second latency, a fourth latency optimization parameter that corresponds to the third environment information and the third status information; and storing, in the mapping relationship, a correspondence between the third environment information, the third status information, and the fourth latency optimization parameter.

Based on the foregoing technical solution, the end-to-end latency is simulated by the latency simulator, which can reduce overheads of simulation-based latency estimation, and support large-scale parallel optimization, and achieve a fast convergence speed.

In some possible implementations, before receiving the first environment information and the first status information that are sent by the vehicle, the method further includes: obtaining third environment information around an autonomous vehicle and third status information of the autonomous vehicle; inputting the third environment information and the third status information into a prediction model, to obtain a fourth latency optimization parameter, where the prediction model is obtained through training based on a training data set, and the training data set includes sample environment information, sample status information, and a sample latency optimization parameter; and storing, in the mapping relationship, a correspondence between the third environment information, the third status information, and the fourth latency optimization parameter.

In some possible implementations, obtaining the third environment information around the autonomous vehicle and the third status information of the autonomous vehicle includes: receiving data collected by a sensor in the autonomous vehicle and the third status information; and indexing the data collected by the sensor and the third status information based on time and a location, to obtain the third environment information and the third status information.

In some possible implementations, indexing the data collected by the sensor and the third status information based on the time and the location, to obtain the third environment information and the third status information includes: indexing the data collected by the sensor and the third status information based on the time and the location and by using a crowdsourcing algorithm or a crowdsensing algorithm, to obtain the third environment information and the third status information.

Based on the foregoing technical solution, a targeted scheduling and orchestration strategies may be provided for massive autonomous driving scenarios (that is, a combination of environment information around the vehicle and the status information of the vehicle). The crowdsourcing algorithm or the crowdsensing algorithm does not require a large amount of manpower and material resources to resolve latency optimization configurations in different extreme scenarios (or extreme situations). Each time a version is updated, only a mapping relationship in the cloud server needs to be updated, without requiring users to make any modification.

According to a fourth aspect, this application provides a data processing apparatus, where the apparatus includes: an obtaining unit, configured to obtain first environment information around a vehicle and first status information of the vehicle; a sending unit, configured to send the first environment information and the first status information to a cloud server; and a receiving unit, configured to receive first latency optimization configuration information sent by the cloud server, where the cloud server stores a mapping relationship between the first environment information, the first status information, and the first latency optimization configuration information, and the first latency optimization configuration information includes a first latency optimization parameter for a processing unit in the vehicle to process data collected by a sensor; and the processing unit is configured to process, based on the first latency optimization parameter, first data collected by the sensor.

With reference to the fourth aspect, in a possible implementation of the fourth aspect, the obtaining unit is configured to obtain second environment information around the vehicle and second status information of the vehicle when a latency of processing, by the processing unit based on the first latency optimization parameter, the data collected by the sensor is greater than or equal to a latency threshold. The sending unit is configured to send the second environment information and the second status information to the cloud server. The receiving unit is configured to receive second latency optimization configuration information sent by the cloud server, where the cloud server stores a mapping relationship between the second environment information, the second status information, and the second latency optimization configuration information, and the second latency optimization configuration information includes a second latency optimization parameter for the processing unit to process data collected by the sensor. The processing unit is configured to process, based on the second latency optimization parameter, second data collected by the sensor.

With reference to the fourth aspect, in a possible implementation of the fourth aspect, the processing unit includes a primary processing unit and a secondary processing unit, and the processing unit is configured to: deploy the first latency optimization parameter on the secondary processing unit; and deploy the first latency optimization parameter on the primary processing unit when, in a first time period, a latency of processing the first data by the secondary processing unit based on the first latency optimization parameter is less than a latency of processing the first data by the primary processing unit.

With reference to the fourth aspect, in a possible implementation of the fourth aspect, the apparatus further includes a determining unit, configured to determine that vehicle control instructions output by the secondary processing unit and the primary processing unit are the same in the first time period.

With reference to the fourth aspect, in a possible implementation of the fourth aspect, the first environment information includes environment information around the vehicle at a plurality of future moments, and the first status information includes status information of the vehicle at the plurality of future moments; and the first latency configuration information includes a latency optimization parameter for the processing unit to process, at the plurality of future moments, data collected by the sensor.

With reference to the fourth aspect, in a possible implementation of the fourth aspect, the first environment information includes at least one of time, a geographical location, climate, and a road condition; and/or the first status information includes at least one of a hardware specification, a system status, and an autonomous driving status of the vehicle.

According to a fifth aspect, this application provides a data processing apparatus, where the apparatus includes: an obtaining unit, configured to obtain first environment information around a vehicle and first status information of the vehicle; and a determining unit, configured to determine first latency optimization configuration information based on the first environment information, the first status information, and a mapping relationship, where the mapping relationship includes a mapping relationship between the first environment information, the first status information, and the first latency optimization configuration information, and the first latency optimization configuration information includes a first latency optimization parameter for a processing unit in the vehicle to process data collected by a sensor; and the processing unit is configured to process, based on the first latency optimization parameter, first data collected by the sensor.

With reference to the fifth aspect, in a possible implementation of the fifth aspect, the obtaining unit is further configured to obtain second environment information around the vehicle and second status information of the vehicle when a latency of processing, by the processing unit based on the first latency optimization parameter, the data collected by the sensor is greater than or equal to a latency threshold. The determining unit is further configured to determine second latency optimization configuration information based on the second environment information, the second status information, and a mapping relationship, where the mapping relationship includes a mapping relationship between the second environment information, the second status information, and the second latency optimization configuration information, and the second latency optimization configuration information includes a second latency optimization parameter for the processing unit to process data collected by the sensor. The processing unit is further configured to process, based on the second latency optimization parameter, second data collected by the sensor.

With reference to the fifth aspect, in a possible implementation of the fifth aspect, the processing unit includes a primary processing unit and a secondary processing unit, and the processing unit is configured to: deploy the first latency optimization parameter on the secondary processing unit; and deploy the first latency optimization parameter on the primary processing unit when, in a first time period, a latency of processing the first data by the secondary processing unit based on the first latency optimization parameter is less than a latency of processing the first data by the primary processing unit.

With reference to the fifth aspect, in a possible implementation of the fifth aspect, the determining unit is further configured to determine that vehicle control instructions output by the secondary processing unit and the primary processing unit are the same in the first time period.

With reference to the fifth aspect, in a possible implementation of the fifth aspect, the first environment information includes environment information around the vehicle at a plurality of future moments, and the first status information includes status information of the vehicle at the plurality of future moments; and the first latency configuration information includes a latency optimization parameter for processing, at the plurality of future moments, data collected by the sensor.

According to a sixth aspect, this application provides a data processing apparatus, where the apparatus includes: an obtaining unit, configured to obtain first environment information around a vehicle and first status information of the vehicle; a determining unit, configured to determine first latency optimization configuration information based on the first environment information, the first status information, and a mapping relationship, where the mapping relationship includes a mapping relationship between environment information, status information, and latency optimization configuration information, and the first latency optimization configuration information includes a first latency optimization parameter for a processing unit in the vehicle to process data collected by a sensor; and a sending unit, configured to send the first latency optimization configuration information to the vehicle.

With reference to the sixth aspect, in a possible implementation of the sixth aspect, the first environment information includes environment information around the vehicle at a plurality of future moments, and the first status information includes status information of the vehicle at the plurality of future moments; and the first latency optimization configuration information includes a latency optimization parameter for processing, at the plurality of future moments, data collected by the sensor.

With reference to the sixth aspect, in a possible implementation of the sixth aspect, the apparatus further includes: an information retrieval unit, configured to retrieve the mapping relationship based on the first environment information and the first status information and by using a hierarchical navigable small world HNSW algorithm, to obtain the first latency optimization configuration information.

With reference to the sixth aspect, in a possible implementation of the sixth aspect, the apparatus further includes a parameter update unit and a storage unit. The obtaining unit is further configured to obtain third environment information around an autonomous vehicle and third status information of the autonomous vehicle before obtaining the first environment information and the first status information that are sent by the vehicle. The determining unit is further configured to determine, based on a third latency optimization parameter set by an offline simulation system, the third environment information, and the third status information, a first latency of processing the data collected by the sensor. The parameter update unit is configured to update the third latency optimization parameter based on the first latency, to obtain a fourth latency optimization parameter. The storage unit is configured to store, in the mapping relationship, a correspondence between the third environment information, the third status information, and the fourth latency optimization parameter.

With reference to the sixth aspect, in a possible implementation of the sixth aspect, the apparatus further includes a latency simulation unit. The obtaining unit is further configured to obtain third environment information around an autonomous vehicle and third status information of the autonomous vehicle before obtaining the first environment information and the first status information that are sent by the vehicle. The determining unit is further configured to extract latency model data based on the third environment information and the third status information, where the latency model data includes one or more of a quantity of threads of an application, periodic data of a thread, temporal probability distribution of thread execution, and a dependency relationship between thread data. The latency simulation unit is configured to input the latency model data into a latency simulator to obtain a second latency. The determining unit is further configured to determine, based on the second latency, a fourth latency optimization parameter that corresponds to the third environment information and the third status information. The storage unit is configured to store, in the mapping relationship, a correspondence between the third environment information, the third status information, and the fourth latency optimization parameter.

With reference to the sixth aspect, in a possible implementation of the sixth aspect, the obtaining unit is configured to: receive data collected by a sensor in the autonomous vehicle and the third status information; and index the data collected by the sensor and the third status information based on time and a location, to obtain the third environment information and the third status information.

With reference to the sixth aspect, in a possible implementation of the sixth aspect, the obtaining unit is configured to index the data collected by the sensor and the third status information based on the time and the location and by using a crowdsourcing algorithm or a crowdsensing algorithm, to obtain the third environment information and the third status information.

According to a seventh aspect, this application provides a data processing apparatus. The apparatus includes a processing unit and a storage unit. The storage unit is configured to store instructions, and the processing unit executes the instructions stored in the storage unit, to cause the apparatus to perform the data processing method according to any one of the possible implementations of the first aspect or the second aspect.

According to an eighth aspect, this application provides a data processing apparatus. The apparatus includes a processing unit and a storage unit. The storage unit is configured to store instructions, and the processing unit executes the instructions stored in the storage unit, to cause the apparatus to perform the data processing method according to any one of the possible implementations of the third aspect.

According to a ninth aspect, this application provides a data processing system. The control system includes a sensor and a computing platform. The computing platform includes the data processing apparatus according to any one of the possible implementations of the fourth aspect, or includes the data processing apparatus according to any one of the possible implementations of the fifth aspect, or includes the data processing apparatus according to any one of the possible implementations of the seventh aspect.

According to a tenth aspect, this application provides a vehicle. The vehicle includes the data processing apparatus according to any one of the possible implementations of the fourth aspect, or includes the data processing apparatus according to any one of the possible implementations of the fifth aspect, or includes the data processing apparatus according to the seventh aspect, or includes the data processing system according to the ninth aspect.

According to an eleventh aspect, this application provides a server. The server includes the data processing apparatus according to any one of the possible implementations of the sixth aspect, or includes the data processing apparatus according to the eighth aspect.

According to a twelfth aspect, this application provides a computer program product. The computer program product includes computer program code. When the computer program code is run on a computer, the computer is caused to perform the data processing method according to any one of the possible implementations of the first aspect or the second aspect.

According to a thirteenth aspect, this application provides a computer program product. The computer program product includes computer program code. When the computer program code is run on a computer, the computer is caused to perform the method according to any one of the possible implementations of the third aspect.

It should be noted that the computer program code may be completely or partially stored in a first storage medium. The first storage medium may be encapsulated with a processor, or may be encapsulated separately from the processor. This is not specifically limited in embodiments of this application.

According to a fourteenth aspect, this application provides a computer-readable medium. The computer-readable medium stores program code. When the computer program code is run on a computer, the computer is caused to perform the data processing method according to any one of the possible implementations of the first aspect or the second aspect.

According to a fifteenth aspect, this application provides a computer-readable medium. The computer-readable medium stores program code. When the computer program code is run on a computer, the computer is caused to perform the data processing method according to any one of the possible implementations of the third aspect.

According to a sixteenth aspect, this application provides a chip. The chip includes a circuit, and the circuit is configured to perform the data processing method according to any one of the possible implementations of the first aspect or the second aspect.

According to a seventeenth aspect, this application provides a chip. The chip includes a circuit, and the circuit is configured to perform the data processing method according to any one of the possible implementations of the third aspect.

### BRIEF DESCRIPTION OF DRAWINGS

FIG. 1 is a functional block diagram of a vehicle according to an embodiment of this application;
FIG. 2 is a diagram of a relationship between application nodes in a robot operating system ROS;
FIG. 3 is a schematic flowchart of a data processing method according to an embodiment of this application;
FIG. 4 is a diagram of a system architecture according to an embodiment of this application;
FIG. 5 is another diagram of a system architecture according to an embodiment of this application;
FIG. 6 is another schematic flowchart of a data processing method according to an embodiment of this application;
FIG. 7 is an example diagram of a data structure of a fast retrieval layer for a latency feature vector according to an embodiment of this application;
FIG. 8 is another schematic flowchart of a data processing method according to an embodiment of this application;
FIG. 9 is a block diagram of a data processing apparatus according to an embodiment of this application;
FIG. 10 is another block diagram of a data processing apparatus according to an embodiment of this application; and
FIG. 11 is another block diagram of a data processing apparatus according to an embodiment of this application.

### DESCRIPTION OF EMBODIMENTS

The following describes the technical solutions in embodiments of this application with reference to the accompanying drawings in embodiments of this application. In descriptions in embodiments of this application, "/" means "or" unless otherwise specified. For example, A/B may represent A or B. In this specification, "and/or" describes only an association relationship for describing associated objects and represents that three relationships may exist. For example, A and/or B may represent the following three cases: Only A exists, both A and B exist, and only B exists. "At least one" means one or more. For example, "at least one of A and B ", similar to "A and/or B", describes an association relationship between associated objects and represents that three relationships may exist. For example, at least one of A and B may represent the following three cases: Only A exists, both A and B exist, and only B exists.

In embodiments of this application, prefix words such as "first" and "second" are used only to distinguish different described objects, and do not limit locations, a sequence, priorities, quantities, content, or the like of the described objects. In embodiments of this application, use of a prefix word, for example, an ordinal number, used to distinguish between described objects does not constitute a limitation on the described objects. For descriptions of the described objects, refer to the descriptions of the context in the claims or embodiments. The use of such a prefix word should not constitute a redundant limitation. In addition, in descriptions of embodiments, unless otherwise specified, "a plurality of" means two or more.

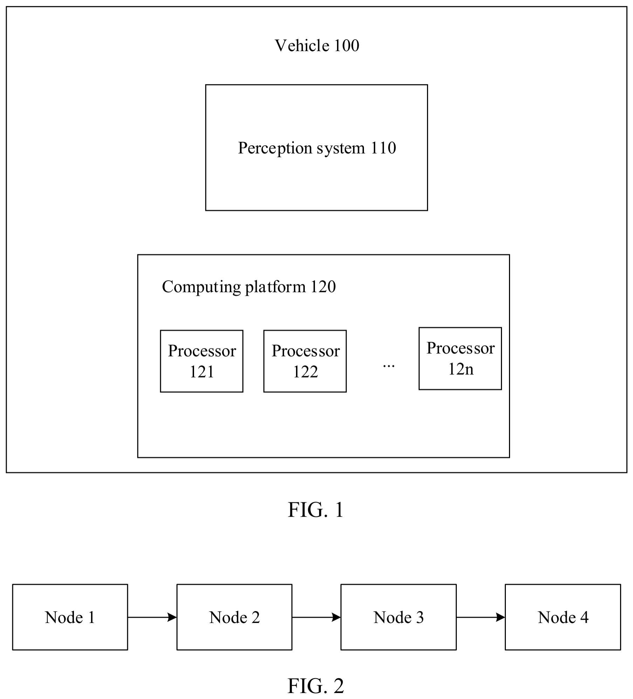

FIG. 1 is a functional block diagram of a vehicle 100 according to an embodiment of this application. The vehicle 100 may include a perception system 120 and a computing platform 150. The perception system 120 may include one or more types of sensors that sense environment information around the vehicle 100. For example, the perception system 120 may include a positioning system. The positioning system may be a global positioning system (global positioning system, GPS), a BeiDou system, or another positioning system. The perception system 120 may further include one or more of an inertial measurement unit (inertial measurement unit, IMU), a lidar, a millimeter-wave radar, an ultrasonic radar, and a camera apparatus.

Some or all functions of the vehicle 100 may be controlled by the computing platform 150. The computing platform 150 may include one or more processors, for example, processors 151 to 15n (where n is a positive integer). The processor is a circuit having a signal processing capability. In an implementation, the processor may be a circuit having an instruction reading and running capability, for example, a central processing unit (central processing unit, CPU), a microprocessor, a graphics processing unit (graphics processing unit, GPU) (which may be understood as a microprocessor), or a digital signal processor (digital signal processor, DSP). In another implementation, the processor may implement a specific function based on a logical relationship of a hardware circuit. The logical relationship of the hardware circuit is fixed or reconfigurable. For example, the processor is a hardware circuit implemented by an application-specific integrated circuit (application-specific integrated circuit, ASIC) or a programmable logic device (programmable logic device, PLD), for example, a field programmable gate array (field programmable gate array, FPGA). In the reconfigurable hardware circuit, a process in which the processor loads a configuration document to implement hardware circuit configuration may be understood as a process in which the processor loads instructions to implement functions of some or all of the foregoing units. In addition, the processor may alternatively be a hardware circuit designed for artificial intelligence, and may be understood as an ASIC, for example, a neural network processing unit (neural network processing unit, NPU), a tensor processing unit (tensor processing unit, TPU), or a deep learning processing unit (deep learning processing unit, DPU). In addition, the computing platform 150 may include a memory. The memory is configured to store instructions. Some or all of the processors 151 to 15n may invoke the instructions in the memory, to implement a corresponding function.

The vehicle in embodiments of this application is a vehicle in a broad sense, and may be a transportation tool (for example, a commercial vehicle, a passenger vehicle, a motorcycle, a flight vehicle, or a train), an industrial vehicle (for example, a forklift truck, a trailer, or a tractor), an engineering vehicle (for example, an excavator, a bulldozer, or a crane), an agricultural device (for example, a lawn mower or a harvester), a recreation device, a toy vehicle, and the like. A type of the vehicle is not specifically limited in embodiments of this application.

As described above, a very important indicator for measuring safety is an end-to-end latency of a data flow link of an automated driving system, for example, a latency from a moment at which a sensor like a lidar or a camera collects an original signal to a moment at which a brake instruction is sent to a chassis domain controller, and running time of each node in the data flow link has a direct and significant impact. A low end-to-end latency (for example, less than 100 ms) can greatly improve a safety coefficient of vehicles and pedestrians, and is one of key objectives for subsequent optimization of systems and applications.

Currently, end-to-end latency optimization methods commonly used by automated driving system engineers are mostly used to adjust and optimize parameters of automated driving systems and applications in some limited scenarios. Parameter adjustment and optimization methods include manual adjustment and optimization based on expert experience, direct adjustment and optimization on vehicles in an online closed-loop feedback mode, and adjustment and optimization using abstract models, simulators, and a combination of simulators and AI optimization algorithms. However, these methods are basically applied to some common working conditions and universal environments, and are difficult to perform adaptive dynamic adjustment for different scenarios during traveling of vehicles. Consequently, these methods are insufficiently generalized. In addition, an adjustment process is generally time-consuming, and the entire process takes several hours even if computing resources of a cloud server are combined.

Embodiments of this application provide a data processing method and apparatus, and a vehicle. The vehicle may send environment information around the vehicle and current status information of the vehicle to a cloud server. The cloud server may send, to the vehicle based on a mapping relationship between environment information, status information, and latency optimization configuration information, latency optimization configuration information that corresponds to the environment information and the status information. The vehicle may process, based on the latency optimization configuration information, data collected by a sensor. This helps reduce an end-to-end latency and helps ensure safety of the vehicle and pedestrians.

Before the technical solutions provided in embodiments of this application are described, several technical terms related to embodiments of this application are first described.

Message passing: In a computer system, the message passing is a general term of a type of data communication method performed between processes or software components. During message passing, to-be-communicated data is abstracted and encapsulated into a "message", and two or more parties participating in communication implement message passing between the processes or the components by invoking primitives such as message sending and receiving primitives, to complete data communication.

Autonomous driving intelligent operating system: The operating system is based on a portable operating system interface (portable operating system interface, POSIX) standard and applied to high-performance computing and high-bandwidth communication required by autonomous driving, and provides functions such as vehicle environment perception, intelligent decision-making, and path planning.

Application node: In an autonomous driving intelligent operating system, the application node is an application that has a specific autonomous driving function (such as perception, fusion, and planning) and that is encapsulated by using communication middleware (such as a robot operating system (robot operating system, ROS), or communication management (communication management, CM) in an automotive open system architecture (automotive open system architecture, AUTOSAR)), and is usually a set of a single process and a plurality of threads. Two or more nodes invoke the communication middleware to implement message passing and service invoking between processes or components.

Message channel: The message channel is a specified communication channel between application nodes in an autonomous driving intelligent operating system, and includes a send port of a sender, a receive port of a receiver, a channel name, a message format, and the like.

Currently, a latency of many autonomous driving applications fluctuates due to an impact of an external environment or a scene. As a result, an end-to-end latency of autonomous driving changes, and an actual deployment effect of an end-to-end latency optimization configuration obtained through offline calculation is affected. Many autonomous driving algorithms are scenario-driven and data-driven. When an autonomous vehicle travels in different environments, different code or model logic is executed. For example, actual logic executed by an application varies significantly depending on scene changes such as highways, urban areas, and underground parking, or even when road traffic flow or the weather at a place of the vehicle changes. Therefore, the end-to-end latency is affected by the scene and external environment, and its baseline and jitter vary significantly in different scenes and environments. It is precisely these fluctuations in external scenes and environments that will significantly affect an offline single latency optimization configuration effect, greatly compromising an effect in some scenes. Even extreme scenarios and environments may have negative effects, which greatly affects safety of an automated driving system and application.

FIG. 2 is a diagram of a relationship between application nodes in an ROS. The ROS includes a node 1, a node 2, a node 3, and a node 4. The node 1 may be configured to obtain an image collected by a sensor. The node 2 may be configured to perform image segmentation on the image collected by the sensor. The node 3 may be configured to identify a type of an obstacle, a distance from an ego vehicle, a speed of the obstacle, and the like in a result obtained through the image segmentation. The node 4 may be configured to: determine a vehicle control instruction based on an identification result of the node 3, and send the vehicle control instruction to a chassis domain controller.

The latency of the autonomous driving application may be understood as a latency of a single node in processing data, for example, a latency of the node 1 in processing data.

The end-to-end latency in autonomous driving may be understood as a latency of a node set in an ROS communication system in processing data, for example, a latency from a moment at which the node 1 obtains the image collected by the sensor to a moment at which the node 4 sends the vehicle control instruction to the chassis domain controller.

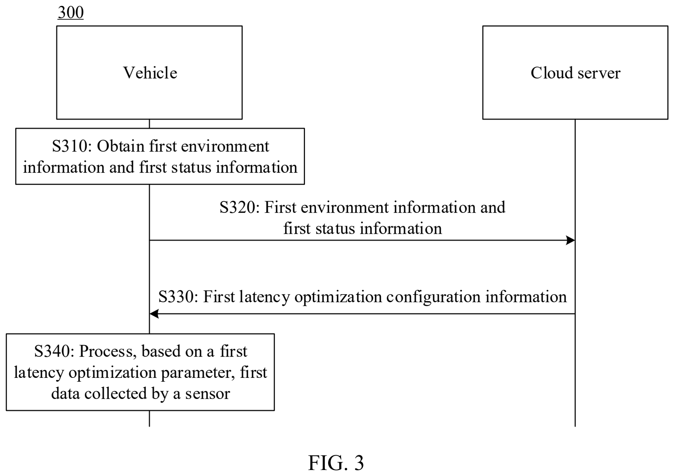

FIG. 3 is a schematic flowchart of a data processing method 300 according to an embodiment of this application. As shown in FIG. 3, the method 300 may be performed by a vehicle and a cloud server, and the method 300 includes step S310 to step S340.

S310: The vehicle obtains first environment information around the vehicle and first status information of the vehicle.

Optionally, that the vehicle obtains the first environment information around the vehicle includes: The vehicle may determine the first environment information based on data collected by a sensor (for example, a camera, a millimeter-wave radar, or a lidar).

For example, Table 1 shows environment information and status information that are obtained by the vehicle.

**Table 1**

| Environment information | Time | Day of week |
|---|---|---|
| | | Time of day |
| | | Season |
| | | Holiday |
| | Geographic location | GPS coordinates |
| | | Road type |
| | | Location |
| | Climate | Weather |
| | | Temperature |
| | | Light brightness |
| | | Visibility |
| | Road condition | Traffic flow |
| | | Quantity of pedestrians |
| | | Quantity of static objects |
| | | Road speed limit |
| | ... | ... |
| Status information | Hardware specifications | Vehicle type |
| | | Sensor types and quantities |
| | | System-on-chip (system-on-chip, SoC) type |
| | | CPU/Memory/Cache specifications |
| | | Network specification |
| | System status | System and application versions |
| | | Average/Peak CPU usage |
| | | Average/Peak memory usage |
| | | Average/Peak network usage |
| | | Application execution latency model |
| | | Average/Peak end-to-end latency |
| | Autonomous driving status | Autonomous driving mode |
| | | Average vehicle speed |
| | | Driving style (sport/economic/...) |
| | | Assistance features |
| | ... | ... |

The foregoing autonomous driving mode may be understood as an autonomous driving mode currently enabled by the vehicle, for example, navigation cruise assistant (navigation cruise assistant, NCA), integrated cruise assistant (integrated cruise assistant, ICA), or automated valet parking (auto valet parking, AVP). The assistance features may include autonomous emergency braking (autonomous emergency braking, AEB), lane departure warning (lane departure warning, LDW), and the like.

The environment information and the status information shown in Table 1 are merely examples, and the vehicle may obtain more or less information than the information shown in Table 1.

Optionally, the environment information may include the data collected by the sensor (for example, one or more of a camera, a lidar, a millimeter-wave radar, a GPS, and an IMU) in the vehicle. The vehicle may send the data collected by the sensor to the cloud server, and the cloud server determines an environment (for example, a geographical location, time, or a road condition) in which the vehicle is located.

S320: The vehicle sends the first environment information and the first status information to the cloud server.

Correspondingly, the cloud server may receive the first environment information and the first status information that are sent by the vehicle.

Optionally, after determining the first environment information based on the data collected by the sensor, the vehicle may send the first environment information and the first status information to the cloud server; or the vehicle may send the data collected by the sensor and the first status information to the cloud server, and the cloud server determines the first environment information based on the data collected by the sensor.

Optionally, the vehicle may periodically send the environment information around the vehicle and the status information of the vehicle to the cloud server.

Optionally, before the cloud server receives the first environment information and the first status information that are sent by the vehicle, the method 300 further includes: The cloud server receives third status information from an autonomous vehicle and data collected by a sensor in the autonomous vehicle. The cloud server indexes, based on time and a location, the third status information and the data collected by the sensor, to obtain third environment information and the third status information.

Optionally, that the cloud server indexes, based on the time and the location, the third status information and the data collected by the sensor, to obtain the third environment information and the third status information includes: The cloud server indexes, based on the time and the location and by using a crowdsourcing algorithm or a crowdsensing algorithm, the third status information and the data collected by the sensor, to obtain the third environment information and the third status information.

S330: The cloud server sends first latency optimization configuration information to the vehicle based on the first environment information, the first status information, and a mapping relationship, where the mapping relationship includes a mapping relationship between the environment information, the status information, and latency optimization configuration information, and the first latency optimization configuration information includes a first latency optimization parameter for a processing unit in the vehicle to process the data collected by the sensor.

Optionally, the mapping relationship may also be referred to as a latency optimization configuration information retrieval library. The cloud server may store the latency optimization configuration information retrieval library, and the latency optimization configuration information retrieval library includes the mapping relationship between the environment information, the status information, and the latency optimization configuration information.

Optionally, the first environment information includes environment information around the vehicle at a plurality of future moments, and the first status information includes status information of the vehicle at the plurality of future moments; and the first latency configuration information includes a latency optimization parameter for processing, at the plurality of future moments, data collected by the sensor.

For example, the vehicle may send navigation information (for example, navigation information of the vehicle from a current location to a destination) to the cloud server, and the cloud server may determine, based on the navigation information, the environment information around the vehicle at the plurality of future moments and the status information of the vehicle at the plurality of future moments. The cloud server may determine latency optimization configuration information at the plurality of future moments based on the environment information around the vehicle at the plurality of future moments, the status information of the vehicle at the plurality of future moments, and a mapping relationship, and send the latency optimization configuration information at the plurality of future moments to the vehicle. In this way, the vehicle may store the latency optimization configuration information at the plurality of future moments in advance. When the environment information around the vehicle and/or the status information of the vehicle changes, appropriate latency optimization configuration information may be selected from the latency optimization configuration information at the plurality of future moments, to process the data collected by the sensor. This helps avoid a process of frequent interaction between the vehicle and the cloud server.

For example, the vehicle may alternatively determine, based on the navigation information, the environment information around the vehicle at the plurality of future moments and the status information of the vehicle at the plurality of future moments, to send the environment information around the vehicle at the plurality of future moments and the status information of the vehicle at the plurality of future moments to the cloud server.

The first latency optimization configuration information may include a latency optimization parameter for at least some of the node 2, the node 3, and the node 4 shown in FIG. 2 to process the data collected by the sensor.

For example, the latency optimization parameter includes one or more of priority information of a task in the processing unit, core binding information, and a scheduling parameter of a scheduler in an operating system (for example, a Linux system).

Optionally, the method 300 further includes: The vehicle obtains second environment information around the vehicle and second status information of the vehicle when determining, based on the first latency optimization parameter, that a latency of processing the data collected by the sensor is greater than or equal to a latency threshold. The vehicle sends the second environment information and the second status information to the cloud server. The cloud server sends second latency optimization configuration information to the vehicle based on the second environment information, the second status information, and a mapping relationship, where the second latency optimization configuration information includes a second latency optimization parameter for the processing unit to process data collected by the sensor. The vehicle processes, based on the second latency optimization parameter, second data collected by the sensor.

For example, at a moment T₁, a type of a road in which the vehicle is located is a highway, a road speed limit is 120 kilometers per hour (km/h), and CPU usage of the vehicle is 50%. The vehicle may send the information to the cloud server, and correspondingly the cloud server determines latency optimization configuration information 1 based on a mapping relationship and sends the latency optimization configuration information 1 to the vehicle. The vehicle may process, based on the latency configuration information 1, the data collected by the sensor.

At a moment T₂ (for example, a moment after the moment T₁), a type of a road in which the vehicle is located is an urban road, a road speed limit is 80 km/h, and CPU usage of the vehicle is 80%. When a latency of processing, by the vehicle based on the latency optimization configuration information 1, the data collected by the sensor is greater than or equal to a latency threshold (for example, 100 ms), the vehicle may send, to the cloud server, environment information and status information that correspond to the moment T₂, and correspondingly the cloud server determines, based on the environment information and the status information at the moment T₂, and a mapping relationship, latency optimization configuration information 2 and sends the latency optimization configuration information 2 to the vehicle. The vehicle may process, based on the latency configuration information 2, the data collected by the sensor. Because the environment information and/or the status information changes, when a latency of processing, by the processing unit, the data collected by the sensor is greater than or equal to the latency threshold, the vehicle may request new latency optimization configuration information from the cloud server, so that the vehicle processes, based on the new latency optimization configuration information, the data collected by the sensor. This helps reduce an end-to-end latency in a timely manner, and helps improve vehicle safety and driving safety of users.

Optionally, before the cloud server sends the first latency optimization configuration information to the vehicle, the method 300 further includes: retrieving the mapping relationship based on the first environment information, the first status information, and an HNSW algorithm, to obtain the first latency optimization configuration information.

Optionally, before the cloud server receives the first environment information and the first status information that are sent by the vehicle, the method 300 further includes: The cloud server obtains third environment information around an autonomous vehicle and third status information of the autonomous vehicle; determines, based on a third latency optimization parameter set by an offline simulation system, the third environment information, and the third status information, a first latency of processing data collected by a sensor; and updates the third latency optimization parameter based on the first latency, to obtain a fourth latency optimization parameter. The cloud server stores, in the mapping relationship, a correspondence between the third environment information, the third status information, and the fourth latency optimization parameter.

The autonomous vehicle may be understood as a road test vehicle, and the third environment information and the third status information may be information collected by the road test vehicle.

The third latency optimization parameter may be a preset latency optimization parameter, or may be a latency optimization parameter obtained through previous optimization. For example, the preset latency optimization parameter indicates that priorities of a plurality of tasks in the processing unit are the same.

For example, the cloud server may store the offline simulation system, and the cloud server may set, in the offline simulation system, a priority of an autonomous driving application process and a parameter (namely, the third latency optimization parameter) corresponding to core binding, and input the third environment information and the third status information into the offline simulation system. The cloud server may monitor an end-to-end latency during actual running in the offline simulation system. The cloud server may update the third latency optimization parameter based on the end-to-end latency during actual running, to obtain the fourth latency optimization parameter. The cloud server may store, in the mapping relationship, a correspondence between the third environment information, the third status information, and the fourth latency optimization parameter.

When updating the third latency optimization parameter based on the end-to-end latency during actual running, the cloud server may obtain the fourth latency optimization parameter through repeated iteration by using a heuristic AI optimization algorithm, a reinforcement learning algorithm, or a deep learning algorithm. In this way, an end-to-end latency calculation method is more accurate and does not require additional simulation verification before deployment on the cloud server.

Optionally, before the cloud server receives the first environment information and the first status information that are sent by the vehicle, the method 300 further includes: The cloud server obtains third environment information around an autonomous vehicle and third status information of the autonomous vehicle. The cloud server extracts latency model data based on the third environment information and the third status information, where the latency model data includes one or more of a quantity of threads of an application, periodic data of a thread, temporal probability distribution of thread execution, and a dependency relationship between thread data. The cloud server inputs the latency model data into a latency simulator to obtain a second latency. The cloud server determines, based on the second latency, a fourth latency optimization parameter that corresponds to the third environment information and the third status information. The cloud server stores, in the mapping relationship, a correspondence between the third environment information, the third status information, and the fourth latency optimization parameter.

For example, the cloud server may extract, based on the third environment information and the third status information that are sent by the autonomous vehicle, latency model data of an automated driving system and application in the third environment information. The latency model data includes but is not limited to one or more of a quantity of threads of an application, periodic data of a thread, temporal probability distribution of thread execution, and a dependency relationship between thread data. Then, an end-to-end latency is directly obtained through calculation by using the latency simulator, and the fourth latency optimization parameter is obtained through repeated iteration by using a heuristic AI optimization algorithm, a reinforcement learning algorithm, or a deep learning optimization algorithm. Advantages of this method include low overheads for simulation-based latency estimation, a capability for large-scale parallel optimization, and a fast convergence speed.

Optionally, before the cloud server receives the first environment information and the first status information that are sent by the vehicle, the method 300 further includes: The cloud server obtains third environment information around an autonomous vehicle and third status information of the autonomous vehicle. The cloud server inputs the third environment information and the third status information data into a prediction model to obtain a fourth latency optimization parameter. The cloud server stores, in the mapping relationship, a correspondence between the third environment information, the third status information, and the fourth latency optimization parameter.

For example, the prediction model may be trained by using a training data set. The training data set includes environment information around the vehicle, status information of the vehicle, and latency optimization configuration information (priority information of a task, core binding information, and a scheduling parameter) that correspond to the environment information and the status information. The trained prediction model may be stored in the cloud server. In this way, after the autonomous vehicle (or a road test vehicle) uploads road test data (including environment information around the road test vehicle and status information of the road test vehicle) to the cloud server, the cloud server may input the road test data into the prediction model, to obtain corresponding latency optimization configuration information. The cloud server may store, in the mapping relationship, a correspondence between the environment information, the status information, and the latency optimization configuration information.

Optionally, that the cloud server obtains the third environment information around the autonomous vehicle and the third status information of the autonomous vehicle includes: The cloud server receives the third status information of the autonomous vehicle and data collected by a sensor in the autonomous vehicle. The cloud server indexes, based on time and a location, the third status information and the data collected by the sensor, to obtain the third environment information and the third status information.

Optionally, that the cloud server indexes, based on the time and the location, the third status information and the data collected by the sensor, to obtain the third environment information and the third status information includes: The cloud server indexes, based on the time and the location and by using a crowdsourcing algorithm or a crowdsensing algorithm, the third status information and the data collected by the sensor, to obtain the third environment information and the third status information.

S340: The vehicle processes, based on the first latency optimization parameter, first data collected by the sensor.

Optionally, the vehicle includes a primary processing unit and a secondary processing unit. That the vehicle processes, based on the first latency optimization parameter, the first data collected by the sensor includes: The vehicle deploys the first latency optimization parameter on the secondary processing unit; and the vehicle deploys the first latency optimization parameter on the primary processing unit when, in a first time period, a latency of processing the first data by the secondary processing unit based on the first latency optimization parameter is less than a latency of processing the first data by the primary processing unit.

For example, the primary processing unit may be a primary domain, and the secondary processing unit may be a secure secondary domain. Alternatively, the primary processing unit may be a main processor, and the secondary processing unit may be a secondary processor.

That the latency of processing the first data by the secondary processing unit based on the first latency optimization parameter is less than the latency of processing the first data by the primary processing unit may be understood as that, within preset duration, an average value of latencies of processing the first data by the secondary processing unit based on the first latency optimization parameter is less than an average value of latencies of processing the first data by the primary processing unit, and/or a maximum value of latencies of processing the first data by the secondary processing unit based on the first latency optimization parameter is less than a maximum value of latencies of processing the first data by the primary processing unit.

Optionally, before the vehicle deploys the first latency optimization parameter on the primary processing unit, the method 300 further includes: determining that vehicle control instructions output by the secondary processing unit and the primary processing unit are the same in the first time period.

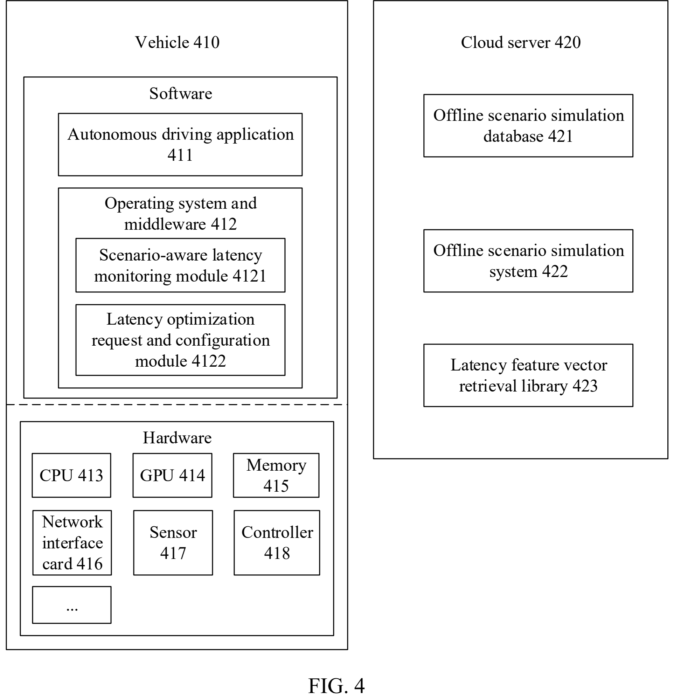

FIG. 4 is a diagram of a system architecture according to an embodiment of this application. The system architecture includes a vehicle 410 and a cloud server 420. The vehicle 410 may include a software platform and a hardware platform. The software platform includes an autonomous driving application 411 and operating system and middleware 412. The operating system and middleware 412 include a scenario-aware latency monitoring module 4121 and a latency optimization request and configuration module 4122. The hardware platform includes a CPU 413, a GPU 414, a memory 415, a network interface card 416, a sensor 417, a controller 418, and the like.

The cloud server 420 may include an offline scenario simulation database 421, an offline scenario simulation system 422, and a latency feature vector retrieval library 423. The latency feature vector retrieval library may store the mapping relationship.

The scenario-aware latency monitoring module 4121 may be configured to: be aware of environment information around the vehicle 410 and a change of an end-to-end latency in a current scenario, and upload the environment information and status information of the vehicle 410 to the cloud server 420.

The scenario-aware latency monitoring module 4121 may upload the environment information to the cloud server 420, or may upload data collected by the sensor 417 to the cloud server 420. The cloud server 420 may determine the environment information around the vehicle 410 based on the data collected by the sensor 417.

The latency optimization request and configuration module 4122 may be configured to: send a request to the cloud server 420 to optimize the end-to-end latency in the current scenario, receive latency optimization configuration information sent by the cloud server 420, and configure the latency optimization configuration information on the vehicle 410.

The offline scenario simulation database 421 may be configured to record environment data and vehicle status information of different vehicles in different scenarios such as different roads and weather conditions, including but not limited to point cloud data collected by a lidar, image data collected by a camera, point cloud data collected by a millimeter-wave radar, data collected by a GPS and an inertia sensor, and run logs of hardware and software in the vehicles, which may be subsequently used for autonomous driving scenario playback, simulation, and the like.

The offline scenario simulation system 422 may be configured to: read the environment information and the status information in the offline scenario simulation database 421, and provide autonomous driving scenario-level simulation and simulation functions of different time, climate, geographical locations, and road conditions.

The latency feature vector retrieval library 423 may be configured to record environment information and status information in different scenarios, and latency optimization configuration information obtained by the offline scenario simulation system 422 through calculation. The environment information includes but is not limited to time, a geographical location, a climate condition, a road condition, a structure, and the like. The status information includes but is not limited to a hardware specification, a system status, an autonomous driving status, and the like.

The CPU 413 or the GPU 414 may be configured to provide a necessary computing power resource for an automated driving system and application.

The network interface card 416 may be configured to provide a network communication resource for the automated driving system and application.

The memory 415 may be configured to provide a storage resource for the automated driving system and application.

The sensor 417 may be configured to provide a perception data resource for the automated driving system and application.

The controller 418 may be configured to provide a chassis control capability service for an autonomous vehicle.

The autonomous driving application 411 obtains and controls, by using the operating system and middleware 412, a CPU resource, a GPU resource, a network interface card resource, a memory resource, and the data collected by the sensor that are necessary for running, and controls running of the vehicle 410 by using the controller 418.

The scenario-aware latency monitoring module 4121 analyzes sensor data and application processing data during running of the autonomous driving application 411, to obtain the environment information, the status information, and end-to-end latency information of the vehicle 410. The environment information, the status information, and the end-to-end latency information may be stored in the memory 415, or may be directly sent to the cloud server 420 by using the network interface card 416. The cloud server 420 may record the information in the offline scenario simulation database 421.

The latency optimization request and configuration module 4122 may obtain an end-to-end latency from the scenario-aware latency monitoring module 4121. When the end-to-end latency needs to be optimized, an optimization request is sent to the cloud server 420 by using the network interface card 416, and latency optimization configuration information sent by the latency feature vector retrieval library 423 is received, and then deployed on a current autonomous driving operating system and application.

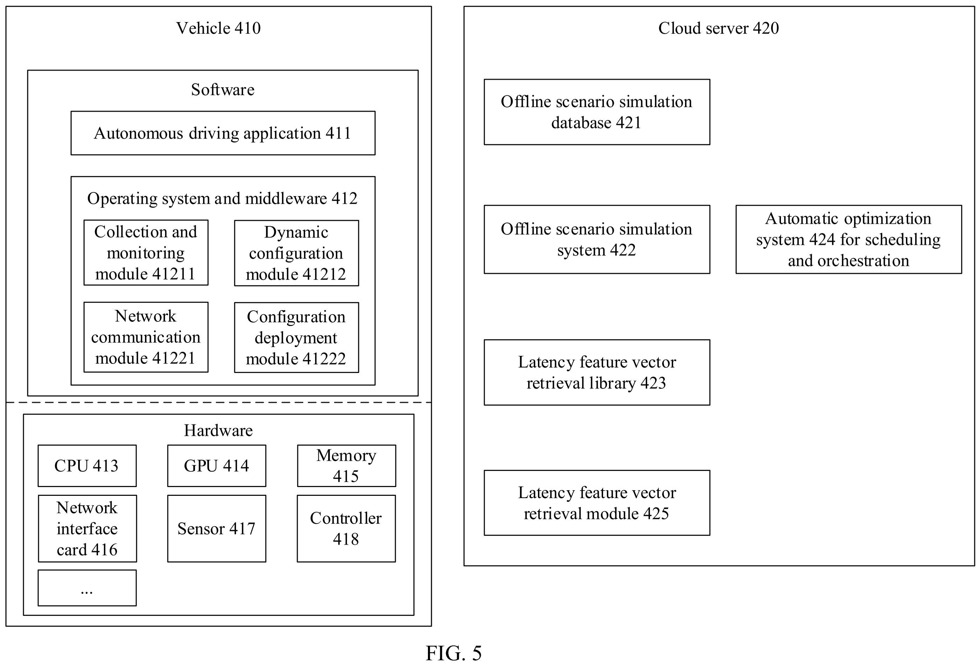

FIG. 5 is another diagram of a system architecture according to an embodiment of this application. In the system architecture, a scenario-aware latency monitoring module 4121 may include a collection and monitoring module 41211 and a dynamic configuration module 41212, and a latency optimization request and configuration module 4122 may include a network communication module 41221 and a configuration deployment module 41222. A cloud server 420 may further include an automatic optimization system 424 for scheduling and orchestration and a latency feature vector retrieval module 425.

The collection and monitoring module 41211 may obtain environment information around a vehicle 410 and status information of the vehicle 410 based on log information such as scheduling and communication during execution of an autonomous driving application and with reference to an algorithm. Then, the network communication module 41221 sends the information to the cloud server 420. The cloud server 420 may record the information in an offline scenario simulation database 421.

The dynamic configuration module 41212 may dynamically obtain an end-to-end latency of the vehicle 410 from the collection and monitoring module 41211. When a current actual end-to-end latency deteriorates compared with an expected end-to-end latency, an optimization request may be sent to the cloud server 420 by using the network communication module 41221. The optimization request may include the environment information around the vehicle 410 and current status information of the vehicle 410. After latency optimization configuration information is obtained from the cloud server 420, the latency optimization configuration information is sent to the configuration deployment module 41222. The configuration deployment module 41222 deploys the latency optimization configuration information on an automated driving system and application, to optimize the end-to-end latency.

The automatic optimization system 424 for scheduling and orchestration may be configured to: periodically pull data from the offline scenario simulation database 421 by using an offline scenario simulation system 422 on the cloud server 420 to simulate different autonomous driving scenarios and observe an end-to-end latency of a data flow of an autonomous driving key link, then perform automatic optimization to find latency optimization configuration information corresponding to different environment information and status information, and record a correspondence between the environment information, the status information, and the latency optimization configuration information in a latency feature vector retrieval library 423.

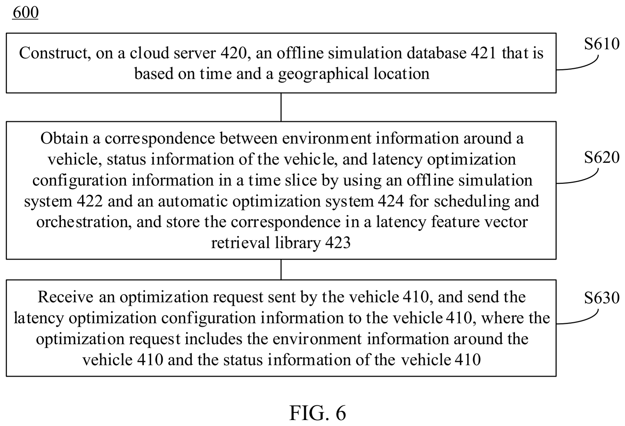

FIG. 6 is a schematic flowchart of a data processing method 600 according to an embodiment of this application. The method 600 may be performed by a cloud server 420, and the method 600 includes the following steps.

S610: Construct, on the cloud server 420, an offline simulation database 421 that is based on time and a geographical location.

For example, step S610 may include two phases:

In a phase 1: During running of an autonomous vehicle (or a road test vehicle), sensor data and status information are automatically collected and uploaded to the cloud server 420.

In a phase 2, the cloud server 420 integrates, based on geographical locations and time, data uploaded by autonomous vehicles (or road test vehicles), to form the offline scenario simulation database 421.

For example, the cloud server 420 integrates, based on the geographical locations and the time and by using a crowdsourcing or crowdsensing technology, the data uploaded by the autonomous vehicles, to form the offline scenario simulation database 421.

Data that needs to be collected by the autonomous vehicle in the phase 1 includes but is not limited to point cloud data of a lidar, image data of a camera, point cloud data of a millimeter-wave radar, data of a sensor such as a GPS or an IMU, and information such as weather, a temperature, humidity, light intensity, and visibility. In the phase 2, data from different sources in the phase 1 is used as a primary index by using a time sequence and geographical location coordinates; and scattered data is constructed into a unified offline scenario simulation database by using a crowdsensing algorithm or a crowdsourcing algorithm. In this way, various autonomous driving scenarios can be played back and simulated for subsequent tests and optimization.

S620: Obtain a correspondence between environment information around a vehicle, status information of the vehicle, and latency optimization configuration information in a time slice by using an offline simulation system 422 and an automatic optimization system 424 for scheduling and orchestration, and store the correspondence in a latency feature vector retrieval library 423.

In step S620, based on data in the offline scenario simulation database 421 in step S610, the cloud server 420 may perform simulation calculation to obtain the latency optimization configuration information that correspond to the environment information and the status information in the time slice, and then store, in the latency feature vector retrieval library 423, the environment information, the status information, and the corresponding latency optimization configuration information in the time slice.

Step S620 may be performed after the offline scenario simulation database 421 is initially constructed, and may also be performed synchronously when the offline scenario simulation database 421 is subsequently updated.

For example, the offline scenario simulation system 422 selects environment information and status information in different time slices from the offline scenario simulation database 421 in a sampling or traversal manner, and simulates and plays back end-to-end latencies of automated driving system applications in different scenarios. Then, the latency optimization configuration information is determined by using a machine learning algorithm.

Step S610 and step S620 may be completed before the vehicle 410 travels.

S630: Receive an optimization request sent by the vehicle 410, and send the latency optimization configuration information to the vehicle 410, where the optimization request includes the environment information around the vehicle 410 and the status information of the vehicle 410.

For example, the vehicle 410 may periodically upload the environment information around the vehicle 410 and the status information of the vehicle 410 to the cloud server 420. The cloud server 420 may obtain, through retrieval, the latency optimization configuration information from the latency feature vector retrieval library 423 based on the environment information and the status information that are sent by the vehicle 410, and send the latency optimization configuration information to the vehicle 410.

The foregoing step S630 may occur during traveling of the vehicle 410.

Optionally, in addition to priority of a task, core binding information, and a scheduling parameter, the latency optimization configuration information may include a latency range. When a latency of processing, by the vehicle 410 based on the latency optimization configuration information, data collected by the sensor is not within the latency range, the vehicle 410 may resend an optimization request to the cloud server.

Hardware in the foregoing hardware platform may be an autonomous driving hardware processing platform. An AI CPU and an AI Core provide a CPU computing resource and a GPU computing resource respectively. An Ethernet card provides a Gigabit network interface card communication capability. A universal flash storage (universal flash storage, UFS) provides a large-capacity storage resource. A sensor provides point cloud data, image data, and GPS data. A controller provides a chassis control capability. The foregoing operating system can be a Linux system.

A collection and monitoring module 41211 of the autonomous driving hardware processing platform collects and records a large amount of original sensor data in an autonomous driving process of the road test vehicle, including but not limited to point cloud coordinate data of a lidar, image and video data of a camera, spatial-temporal coordinate data of a GPS, and time sequence data of an IMU. Because a data volume is large, data in this phase is stored in the UFS by using a CM communication module in the autonomous driving process. Upon completion of a road test, information stored in the UFS is uploaded directly to the cloud server via an Ethernet card or by connecting an external workstation to a memory reader/writer. In addition, status information of the vehicle in the autonomous driving process is also uploaded to the cloud server, including but not limited to vehicle frame information, a vehicle status, hardware SoC resource usage information, a network status, a system software running status, autonomous driving status information of the vehicle, and the like.

After receiving different road test data of different vehicles, the cloud server parses time, a start location, a stop location, a route, and the like of each road test data, then aligns collected sensor data and status information data based on time and GPS coordinate locations, and records the sensor data and status information data as a spatial-temporal database of autonomous driving scenario data, namely, an offline scenario simulation database. In addition, a heuristic algorithm and a neural network-based AI algorithm are used to automatically parse a weather condition, solar term information, and a road congestion status of each road test data, and create indexes other than time and GPS coordinates, facilitating subsequent rapid retrieval and use by the offline scenario simulation system.

The offline scenario simulation system 422 of the cloud server 420 may invoke data from the offline scenario simulation database 421 constructed in step S610, to simulate different autonomous driving scenarios such as different time, geographical locations, weather, and road conditions. The offline scenario simulation system 422 is connected to a software and hardware platform or an automated driving system and application, and can measure accuracy of an execution result of the autonomous driving application and performance of the entire system. Optionally, scenario data (including environment information and status information) collected and uploaded in the real world is limited. In view of this, the offline scenario simulation system uses an enhanced AI algorithm to splice scenario data in different road test data into a same simulation scenario, or may add, to playback data by using a generative AI technology, vehicles, obstacles, pedestrians, and the like that do not exist originally, or even change a feature of an original scenario, for example, changing weather, traffic flow, or a road surface attribute.

In an offline scenario simulation process, the offline scenario simulation system extracts environment information and status information within a time window at a fixed frequency (for example, 1 Hz or 0.1 Hz), to form time serialized data. The time-serialized data may be shown in Table 1.

The offline scenario simulation system 422 constructs, into the latency feature vector retrieval library 423, environment information and status information extracted in all time slices. The environment information and the status information may be independently used by the autonomous vehicle for subsequent retrieval. Some data is scenario-independent data, for example, hardware specification feature data. Some data such as a system status feature fluctuates greatly with time and scenarios. After the latency feature vector retrieval library 423 is established, periodic maintenance may be performed. For example, when each autonomous driving software or hardware is iteratively updated, the foregoing steps S610 and S620 need to be repeated.

In this case, the AI algorithm-based automatic optimization system 424 for scheduling and orchestration optimize an end-to-end latency in each simulated time slice. An input is environment information and status information, and an output is latency optimization configuration information in the time slice. The automatic optimization system 424 for scheduling and orchestration may update the output to the latency feature vector retrieval library 423, to establish a correspondence between the environment information, the status information, and the latency optimization configuration information. In this embodiment of this application, the latency optimization configuration information in the time slice may be determined by using the following two methods.

### Method 1

Priority information of a task and core binding information in an autonomous driving application are directly set in the offline simulation system 422, and an end-to-end latency during actual running is viewed on the offline simulation system 422. The latency optimization configuration information in the time slice is obtained through repeated iterative calculation by using a heuristic AI optimization algorithm, a reinforcement learning algorithm, or a deep learning optimization algorithm. The method 1 is to adjust a task priority and core binding. Advantages of the method 1 are that an end-to-end latency calculation method is more accurate and does not require additional simulation verification before deployment.

The offline simulation system 422 may include a dynamics simulation system and an autonomous driving simulation system of the vehicle.

### Method 2

First, with reference to status information extracted in a time slice, latency model data, of the automated driving system and application, corresponding to environment information in the time slice is extracted and generated. The latency model data includes but is not limited to a quantity of threads of the application, periodic data of a thread, temporal probability distribution of thread execution, a dependency relationship between thread data, and the like. The latency model data is input into a latency simulator to directly obtain an end-to-end latency. Latency optimization configuration information in the time slice is obtained through repeated iterative calculation by using a heuristic AI optimization algorithm, a reinforcement learning algorithm, or a deep learning optimization algorithm. Advantages of the method 2 include low overheads for simulation-based latency estimation, a capability for large-scale parallel optimization, and a fast convergence speed.

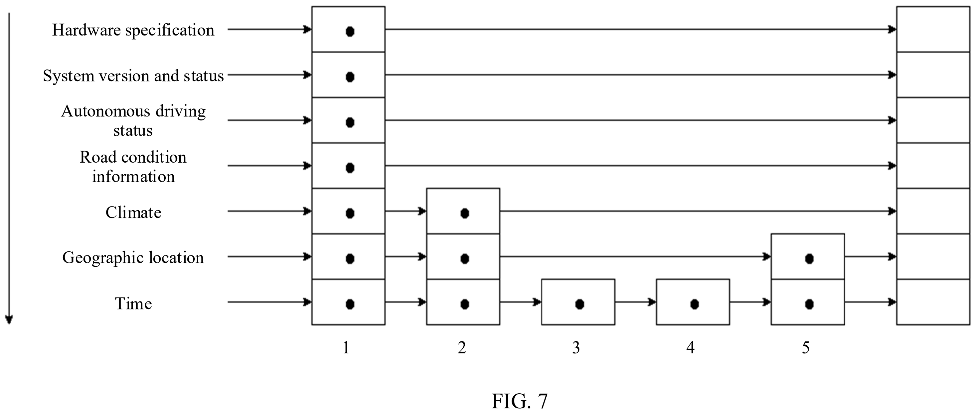

Given a substantial data volume of the latency feature vector retrieval library, this embodiment of this application adopts an HNSW technology and incorporates a skip list principle to construct a fast retrieval layer for latency feature vectors for an original linked list. Because a latency feature vector generated by same road test data has strong locality, there is a large amount of same redundant data within a same time window and a same geographical location. Therefore, latency feature vectors may be sorted based on a change degree, and redundant data may be combined. For example, a hardware specification, a system version, and a status remain unchanged in a same road test. Layering is performed based on density of the latency feature vectors. The query starts from a sparse layer first, and then the query is performed level by level from a dense layer if a condition is met. This can improve a speed of retrieving the latency optimization configuration information, and reduce a response latency of the cloud server. FIG. 7 is an example diagram of a data structure of a fast retrieval layer for a latency feature vector according to an embodiment of this application.

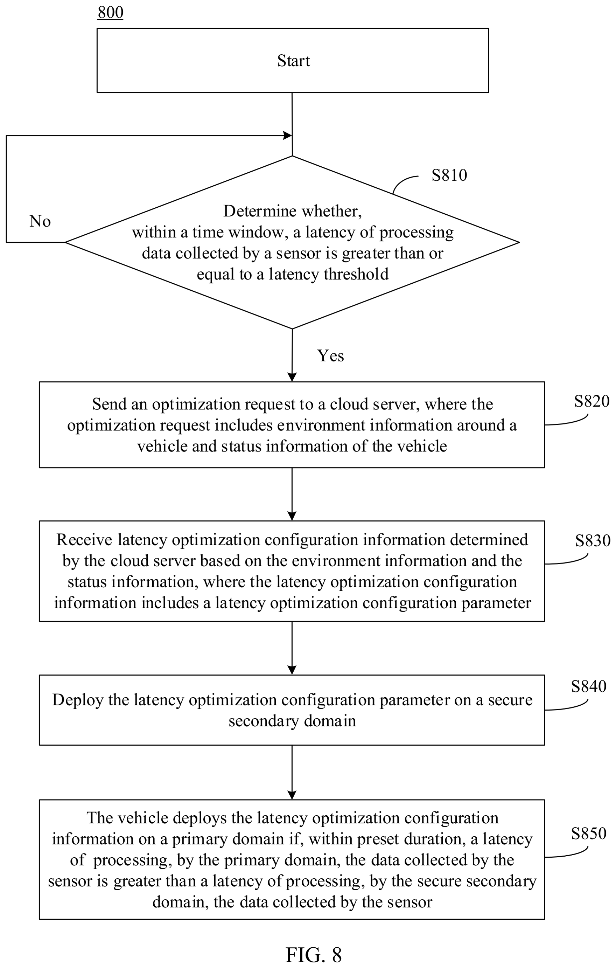

FIG. 8 is a schematic flowchart of a data processing method 800 according to an embodiment of this application. The method 800 may be performed by a vehicle, and the method 800 includes the following steps.

S810: The vehicle determines whether, within a time window, a latency of processing, by a processing unit, data collected by a sensor is greater than or equal to a latency threshold.

S820 is performed when, within the time window, the latency of processing the data collected by the sensor is greater than or equal to a latency threshold; or S810 is performed when, within the time window, the latency of processing the data collected by the sensor is less than the latency threshold.

For example, step S810 may be implemented by using the following two methods:

### Method 1

The data sensed by the sensor and status information of the vehicle are dynamically inferred by using an Al-based algorithm, and a change from external environment information, the status information of the vehicle, and a scenario in which the vehicle is located is inferred by using a pre-trained model.

### Method 2

An end-to-end latency of the vehicle is monitored. When an average end-to-end latency or a jitter exceeds the latency threshold within preset duration, it indicates that an external scenario of the vehicle changes, and latency optimization configuration information needs to be re-deployed. Advantages of the method 2 are fewer resources occupied by an autonomous driving software and hardware platform, low computing overheads, a high response speed of re-deploying latency optimization configuration information when a scenario changes, and high accuracy.

S820: The vehicle sends an optimization request to a cloud server, where the optimization request includes environment information around the vehicle and status information of the vehicle.

For example, a dynamic configuration module 41212 sends the environment information around the vehicle and the status information of the vehicle to the cloud server, and waits for the cloud server to re-search a latency feature vector retrieval library for latency optimization configuration information suitable for a current scenario, and sends the latency optimization configuration information to the vehicle. The cloud server can reduce search response time, and accurately find appropriate latency optimization configuration information based on a large quantity of computing resources in the cloud server, without occupying a local computing resource of the vehicle. During version update, only a latency feature vector index library in the cloud server needs to be updated, and the vehicle is unaware of the update.

The foregoing is described by using an example in which the latency feature vector retrieval library is deployed on the cloud server and the vehicle sends the optimization request to the cloud server. Embodiments of this application are not limited thereto. The latency feature vector retrieval library may alternatively be deployed in the vehicle.

For example, the cloud server may deploy the latency feature vector retrieval library on an autonomous driving hardware processing platform of the vehicle by using a model lossy compression technology. When the vehicle is in an autonomous driving status, if an end-to-end latency of the vehicle is greater than or equal to the latency threshold, the dynamic configuration module 41212 may re-search, based on the environment information around the vehicle and the status information of the vehicle, the compressed latency feature vector retrieval library for the latency optimization configuration information suitable for the current scenario. In this way, the vehicle can obtain updated latency optimization configuration information in a timely manner when the vehicle is not connected to a network, so that function security authentication can be better met.

S830: The vehicle receives latency optimization configuration information determined by the cloud server based on the environment information and the status information, where the latency optimization configuration information includes a latency optimization configuration parameter.

S840: The vehicle deploys the latency optimization configuration parameter on a secure secondary domain.

S850: The vehicle deploys the latency optimization configuration information on the primary domain if, within the preset duration, a latency of processing, by a primary domain, the data collected by the sensor is greater than a latency of processing, by the secure secondary domain, the data collected by the sensor.

The primary domain and the secure secondary domain may process data collected by a same sensor.

For example, after obtaining the latest latency optimization configuration information from the latency feature vector retrieval library of the cloud server, the dynamic configuration module sends the latest latency optimization configuration information to a configuration deployment module 41222. The configuration deployment module 41222 deploys the latency optimization configuration information in the secure secondary domain for autonomous driving, and observes an end-to-end latency optimization effect of the secure secondary domain. The secure secondary domain and the primary domain may both reside on the autonomous driving hardware processing platform, and are both deployed with full stack of autonomous driving applications. The configuration deployment module 41222 may deploy the latency optimization configuration information on the primary domain if, within the preset duration, vehicle control instructions output by the primary domain and the secure secondary domain are the same, and the latency of processing, by the secure secondary domain, the data collected by the sensor is better than the latency of processing, by the primary domain, the data collected by the sensor.

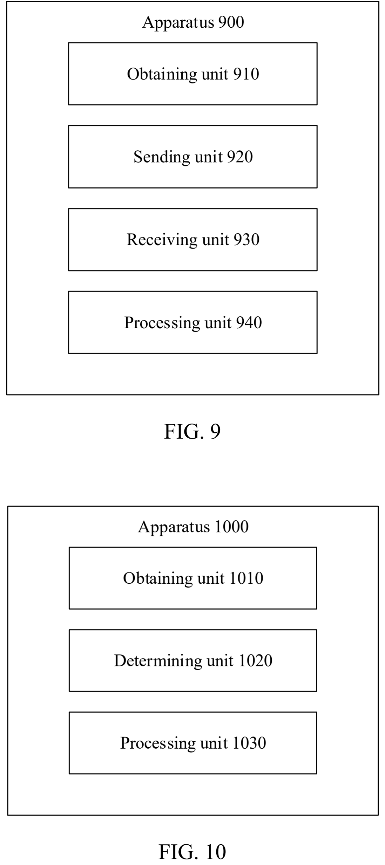

FIG. 9 is a block diagram of a data processing apparatus 900 according to an embodiment of this application. As shown in FIG. 9, the apparatus 900 includes: an obtaining unit 910, configured to obtain first environment information around a vehicle and first status information of the vehicle; a sending unit 920, configured to send the first environment information and the first status information to a cloud server; and a receiving unit 930, configured to receive first latency optimization configuration information sent by the cloud server, where the cloud server stores a mapping relationship between the first environment information, the first status information, and the first latency optimization configuration information, and the first latency optimization configuration information includes a first latency optimization parameter for a processing unit in the vehicle to process data collected by a sensor; and the processing unit 940 is configured to process, based on the first latency optimization parameter, first data collected by the sensor.

Optionally, the obtaining unit 910 is configured to: obtain second environment information around the vehicle and second status information of the vehicle when a latency of processing, by the processing unit based on the first latency optimization parameter, the data collected by the sensor is greater than or equal to a latency threshold. The sending unit 920 is configured to send the second environment information and the second status information to the cloud server. The receiving unit 930 is configured to receive second latency optimization configuration information sent by the cloud server, where the cloud server stores a mapping relationship between the second environment information, the second status information, and the second latency optimization configuration information, and the second latency optimization configuration information includes a second latency optimization parameter for the processing unit to process data collected by the sensor. The processing unit 940 is configured to process, based on the second latency optimization parameter, second data collected by the sensor.

Optionally, the processing unit 940 includes a primary processing unit and a secondary processing unit, and the processing unit 940 is configured to: deploy the first latency optimization parameter on the secondary processing unit; and deploy the first latency optimization parameter on the primary processing unit when, in a first time period, a latency of processing the first data by the secondary processing unit based on the first latency optimization parameter is less than a latency of processing the first data by the primary processing unit.

Optionally, the apparatus 900 further includes a determining unit, configured to determine that vehicle control instructions output by the secondary processing unit and the primary processing unit are the same in the first time period.

Optionally, the first environment information includes environment information around the vehicle at a plurality of future moments, and the first status information includes status information of the vehicle at the plurality of future moments; and the first latency configuration information includes a latency optimization parameter for the processing unit to process, at the plurality of future moments, data collected by the sensor.

Optionally, the first environment information includes at least one of time, a geographical location, climate, and a road condition; and/or the first status information includes at least one of a hardware specification, a system status, and an autonomous driving status of the vehicle.

For example, the obtaining unit 910 may be the computing platform in FIG. 1, or a processing circuit, a processor, or a controller in the computing platform. For example, the obtaining unit 910 is a processor 121 in the computing platform, and the processor 121 may obtain environment information around the vehicle and status information of the vehicle.

For another example, the sending unit 920 and the receiving unit 930 may be communication apparatuses in the vehicle 100.

For another example, the processing unit 940 may be the computing platform in FIG. 1, or a processing circuit, a processor, or a controller in the computing platform. For example, the processing unit 940 is a processor 122 in the computing platform, and the processor 122 may process, based on latency optimization configuration information sent by the cloud server, the data collected by the sensor.

Functions implemented by the obtaining unit 910 and functions implemented by the processing unit 940 may be implemented by different processors, or may be implemented by a same processor. This is not limited in embodiments of this application.

FIG. 10 is a schematic flowchart of a data processing apparatus 1000 according to an embodiment of this application. As shown in FIG. 10, the apparatus 1000 includes an obtaining unit 1010, configured to obtain first environment information around a vehicle and first status information of the vehicle; and a determining unit 1020, configured to determine first latency optimization configuration information based on the first environment information, the first status information, and a mapping relationship, where the mapping relationship includes a mapping relationship between the first environment information, the first status information, and the first latency optimization configuration information, and the first latency optimization configuration information includes a first latency optimization parameter for a processing unit in the vehicle to process data collected by a sensor; and the processing unit 1030 is configured to process, based on the first latency optimization parameter, first data collected by the sensor.

Optionally, the obtaining unit 1010 is further configured to: obtain second environment information around the vehicle and second status information of the vehicle when a latency of processing, by the processing unit based on the first latency optimization parameter, the data collected by the sensor is greater than or equal to a latency threshold. The determining unit 1020 is further configured to determine second latency optimization configuration information based on the second environment information, the second status information, and a mapping relationship, where the mapping relationship includes a mapping relationship between the second environment information, the second status information, and the second latency optimization configuration information, and the second latency optimization configuration information includes a second latency optimization parameter for the processing unit to process data collected by the sensor. The processing unit 1030 is further configured to process, based on the second latency optimization parameter, second data collected by the sensor.

Optionally, the processing unit 1030 includes a primary processing unit and a secondary processing unit, and the processing unit 1030 is configured to: deploy the first latency optimization parameter on the secondary processing unit; and deploy the first latency optimization parameter on the primary processing unit when, in a first time period, a latency of processing the first data by the secondary processing unit based on the first latency optimization parameter is less than a latency of processing the first data by the primary processing unit.

Optionally, the determining unit 1020 is further configured to determine that vehicle control instructions output by the secondary processing unit and the primary processing unit are the same in the first time period.

Optionally, the first environment information includes environment information around the vehicle at a plurality of future moments, and the first status information includes status information of the vehicle at the plurality of future moments; and the first latency configuration information includes a latency optimization parameter for processing, at the plurality of future moments, data collected by the sensor.

For example, the obtaining unit 1010 may be the computing platform in FIG. 1, or a processing circuit, a processor, or a controller in the computing platform. For example, the obtaining unit 1010 is a processor 121 in the computing platform, and the processor 121 may obtain environment information around the vehicle and status information of the vehicle.

For another example, the determining unit 1020 may be the computing platform in FIG. 1, or a processing circuit, a processor, or a controller in the computing platform. For example, the determining unit 1020 is a processor 122 in the computing platform, and the processor 122 may store a mapping relationship between environment information, status information, and latency optimization configuration information. The processor 122 may determine appropriate latency optimization configuration information in a current scenario based on the obtained environment information, status information, and mapping relationship.

For another example, the processing unit 1030 may be the computing platform in FIG. 1, or a processing circuit, a processor, or a controller in the computing platform. For example, the control unit 1030 is a processor 123 in the computing platform, and the processor 123 may process, based on latency optimization configuration information, the data collected by the sensor.

Functions implemented by the obtaining unit 1010, functions implemented by the determining unit 1020, and functions implemented by the control unit 1030 may be implemented by different processors, or may be implemented by a same processor, or some functions may be implemented by a same processor. This is not limited in embodiments of this application.

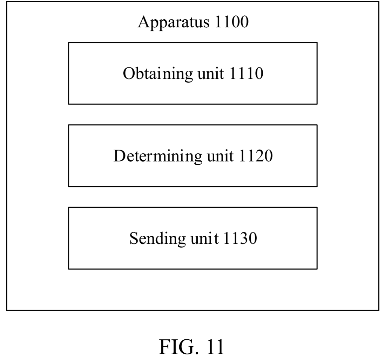

FIG. 11 is a block diagram of a data processing apparatus 1100 according to an embodiment of this application. As shown in FIG. 11, the apparatus 1100 includes: an obtaining unit 1110, configured to obtain first environment information around a vehicle and first status information of the vehicle; a determining unit 1120, configured to determine first latency optimization configuration information based on the first environment information, the first status information, and a mapping relationship, where the mapping relationship includes a mapping relationship between environment information, status information, and latency optimization configuration information, and the first latency optimization configuration information includes a first latency optimization parameter for a processing unit in the vehicle to process data collected by a sensor; and a sending unit 1130, configured to send the first latency optimization configuration information to the vehicle.

Optionally, the first environment information includes environment information around the vehicle at a plurality of future moments, and the first status information includes status information of the vehicle at the plurality of future moments; and the first latency optimization configuration information includes a latency optimization parameter for processing, at the plurality of future moments, data collected by the sensor.

Optionally, the apparatus 1100 further includes: an information retrieval unit, configured to retrieve the mapping relationship based on the first environment information and the first status information and by using a hierarchical navigable small world HNSW algorithm, to obtain the first latency optimization configuration information.

Optionally, the apparatus 1100 further includes a parameter update unit and a storage unit. The obtaining unit 1110 is further configured to obtain third environment information around an autonomous vehicle and third status information of the autonomous vehicle before obtaining the first environment information and the first status information that are sent by the vehicle. The determining unit 1120 is further configured to determine, based on a third latency optimization parameter set by an offline simulation system, the third environment information, and the third status information, a first latency of processing the data collected by the sensor. The parameter update unit is configured to update the third latency optimization parameter based on the first latency, to obtain a fourth latency optimization parameter. The storage unit is configured to store, in the mapping relationship, a correspondence between the third environment information, the third status information, and the fourth latency optimization parameter.

Optionally, the apparatus further includes a latency simulation unit. The obtaining unit 1110 is further configured to obtain third environment information around an autonomous vehicle and third status information of the autonomous vehicle before obtaining the first environment information and the first status information that are sent by the vehicle. The determining unit 1120 is further configured to extract latency model data based on the third environment information and the third status information, where the latency model data includes one or more of a quantity of threads of an application, periodic data of a thread, temporal probability distribution of thread execution, and a dependency relationship between thread data. The latency simulation unit is configured to input the latency model data into a latency simulator to obtain a second latency. The determining unit 1120 is further configured to determine, based on the second latency, a fourth latency optimization parameter that corresponds to the third environment information and the third status information. The storage unit is configured to store, in the mapping relationship, a correspondence between the third environment information, the third status information, and the fourth latency optimization parameter.

Optionally, the obtaining unit 1110 is configured to: receive data collected by a sensor in the autonomous vehicle and the third status information; and index the data collected by the sensor and the third status information based on time and a location, to obtain the third environment information and the third status information.

Optionally, the obtaining unit 1110 is configured to index the data collected by the sensor and the third status information based on the time and the location and by using a crowdsourcing algorithm or a crowdsensing algorithm, to obtain the third environment information and the third status information.

It should be understood that division into units of the foregoing apparatus is merely logical function division. During actual implementation, all or some of the units may be integrated into one physical entity, or may be physically separated. In addition, the units of the apparatus may be implemented in a form of software invoked by a processor. For example, the apparatus includes a processor, the processor is connected to a memory, the memory stores instructions, and the processor invokes the instructions stored in the memory, to implement any one of the foregoing methods or implement functions of the units of the apparatus. The processor is, for example, a general-purpose processor, for example, a CPU or a microprocessor, and the memory is a memory inside the apparatus or a memory outside the apparatus. Alternatively, the units of the apparatus may be implemented in a form of a hardware circuit, and functions of some or all of the units may be implemented by designing the hardware circuit. The hardware circuit may be understood as one or more processors. For example, in an implementation, the hardware circuit is an ASIC, and functions of some or all of the foregoing units are implemented by designing a logical relationship between elements in the circuit. For another example, in another implementation, the hardware circuit may be implemented by using a PLD. An FPGA is used as an example. The hardware circuit may include a large quantity of logic gate circuits, and a connection relationship between the logic gate circuits is configured by using a configuration file, to implement functions of some or all of the foregoing units. All the units of the foregoing apparatus may be implemented in the form of software invoked by the processor, or may be implemented in the form of the hardware circuit, or some of the units are implemented in the form of software invoked by the processor, and remaining units are implemented in the form of the hardware circuit.

Each unit in the foregoing apparatus may be one or more processors (or processing circuits) configured to implement the foregoing method, for example, a CPU, a GPU, an NPU, a TPU, a DPU, a microprocessor, a DSP, an ASIC, or an FPGA, or a combination of at least two of these processor forms.

In addition, all or some of the units of the apparatus may be integrated, or may be implemented independently. In an implementation, these units are integrated and implemented in a form of an SoC. The SoC may include at least one processor, configured to implement any one of the foregoing methods or implement the functions of the units of the apparatus. Types of the at least one processor may be different. For example, the at least one processor includes a CPU and an FPGA, a CPU and an artificial intelligence processor, or a CPU and a GPU.

An embodiment of this application further provides an apparatus. The apparatus includes a processing unit and a storage unit. The storage unit is configured to store instructions, and the processing unit executes the instructions stored in the storage unit, to cause the apparatus to perform the methods or the steps performed in the foregoing embodiments.

Optionally, if the apparatus is located in a vehicle, the processing unit may be the processors 121 to 12n shown in FIG. 1.

An embodiment of this application further provides a data processing system. The path planning system includes one or more sensors and a computing platform. The computing platform includes the data processing apparatus 900 or the data processing apparatus 1000.

An embodiment of this application further provides a vehicle. The vehicle may include the data processing apparatus 900, the data processing apparatus 1000, or the data processing system.

An embodiment of this application further provides a server. The server includes the data processing apparatus 1100.

An embodiment of this application further provides a computer program product. The computer program product includes computer program code. When the computer program code is run on a computer, the computer is caused to perform the data processing method.

An embodiment of this application further provides a computer-readable medium. The computer-readable medium stores program code. When the computer program code is run on a computer, the computer is caused to perform the data processing method.

In an implementation process, steps in the foregoing methods can be implemented by using a hardware integrated logic circuit in a processor, or by using instructions in a form of software. The method disclosed with reference to embodiments of this application may be directly performed by a hardware processor, or may be performed through a combination of hardware in the processor and a software module. The software module may be located in a mature storage medium in the art, like a random access memory, a flash memory, a read-only memory, a programmable read-only memory, an electrically erasable programmable memory, or a register. The storage medium is located in the memory, and a processor reads information in the memory and completes the steps in the foregoing methods in combination with hardware of the processor. To avoid repetition, details are not described herein again.

It should be understood that, in this embodiment of this application, the memory may include a read-only memory and a random access memory, and provide instructions and data for the processor.

It should be understood that sequence numbers of the foregoing processes do not mean execution sequences in various embodiments of this application. The execution sequences of the processes should be determined based on functions and internal logic of the processes, and should not be construed as any limitation on the implementation processes of embodiments of this application.

A person of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular applications and design constraints of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In the several embodiments provided in this application, it should be understood that the disclosed system, apparatus, and method may be implemented in other manners. For example, the described apparatus embodiments are merely examples. For example, division into the units is merely logical function division and may be other division in an actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or another form.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of embodiments.

In addition, functional units in embodiments of this application may be integrated into one processing unit, each of the units may exist alone physically, or two or more units may be integrated into one unit.

When the functions are implemented in the form of a software functional unit and sold or used as an independent product, the functions may be stored in a computer-readable storage medium. Based on such an understanding, the technical solutions of this application essentially, or the part contributing to the conventional technology, or some of the technical solutions may be implemented in a form of a software product. The computer software product is stored in a storage medium, and includes several instructions for instructing a computing device (which may be a personal computer, a server, a network device, or the like) to perform all or some of the steps of the methods described in embodiments of this application. The foregoing storage medium includes any medium that can store program code, such as a USB flash drive, a removable hard disk, a read-only memory (read-only memory, ROM), a random access memory (random access memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A data processing method, comprising:
obtaining first environment information around a vehicle and first status information of the vehicle;
sending the first environment information and the first status information to a cloud server;
receiving first latency optimization configuration information sent by the cloud server, wherein the cloud server stores a mapping relationship between the first environment information, the first status information, and the first latency optimization configuration information, and the first latency optimization configuration information comprises a first latency optimization parameter for a processing unit in the vehicle to process data collected by a sensor; and
processing, based on the first latency optimization parameter, first data collected by the sensor.

2. The method according to claim 1, wherein the method further comprises:
obtaining second environment information around the vehicle and second status information of the vehicle when a latency of processing, by the processing unit based on the first latency optimization parameter, the data collected by the sensor is greater than or equal to a latency threshold;
sending the second environment information and the second status information to the cloud server;
receiving second latency optimization configuration information sent by the cloud server, wherein the cloud server stores a mapping relationship between the second environment information, the second status information, and the second latency optimization configuration information, and the second latency optimization configuration information comprises a second latency optimization parameter for the processing unit to process data collected by the sensor; and
processing, based on the second latency optimization parameter, second data collected by the sensor.

3. The method according to claim 1 or 2, wherein the processing unit comprises a primary processing unit and a secondary processing unit; and processing, based on the first latency optimization parameter, the first data collected by the sensor comprises:
deploying the first latency optimization parameter on the secondary processing unit; and
deploying the first latency optimization parameter on the primary processing unit when, in a first time period, a latency of processing the first data by the secondary processing unit based on the first latency optimization parameter is less than a latency of processing the first data by the primary processing unit.

4. The method according to claim 3, wherein before deploying the first latency optimization parameter on the primary processing unit, the method further comprises:
determining that vehicle control instructions output by the secondary processing unit and the primary processing unit are the same in the first time period.

5. The method according to any one of claims 1 to 4, wherein the first environment information comprises environment information around the vehicle at a plurality of future moments, and the first status information comprises status information of the vehicle at the plurality of future moments; and
the first latency configuration information comprises a latency optimization parameter for the processing unit to process, at the plurality of future moments, data collected by the sensor.

6. The method according to any one of claims 1 to 5, wherein the first environment information comprises at least one of time, a geographical location, climate, and a road condition; and/or
the first status information comprises at least one of a hardware specification, a system status, and an autonomous driving status of the vehicle.

7. A data processing method, comprising:
obtaining first environment information around a vehicle and first status information of the vehicle; and
sending first latency optimization configuration information to the vehicle based on the first environment information, the first status information, and a mapping relationship, wherein the mapping relationship comprises a mapping relationship between environment information, status information, and latency optimization configuration information, and the first latency optimization configuration information comprises a first latency optimization parameter for a processing unit in the vehicle to process data collected by a sensor.

8. The method according to claim 7, wherein the first environment information comprises environment information around the vehicle at a plurality of future moments, and the first status information comprises status information of the vehicle at the plurality of future moments; and
the first latency optimization configuration information comprises a latency optimization parameter for processing, at the plurality of future moments, data collected by the sensor.

9. The method according to claim 7 or 8, wherein the method further comprises:
retrieving the mapping relationship based on the first environment information and the first status information and by using a hierarchical navigable small world HNSW algorithm, to obtain the first latency optimization configuration information.

10. The method according to any one of claims 7 to 9, wherein before obtaining the first environment information around the vehicle and the first status information of the vehicle, the method further comprises:
obtaining third environment information around an autonomous vehicle and third status information of the autonomous vehicle;
determining, based on a third latency optimization parameter set by an offline simulation system, the third environment information, and the third status information, a first latency of processing data collected by a sensor;
updating the third latency optimization parameter based on the first latency, to obtain a fourth latency optimization parameter; and
storing, in the mapping relationship, a correspondence between the third environment information, the third status information, and the fourth latency optimization parameter.

11. The method according to any one of claims 7 to 9, wherein before obtaining the first environment information around the vehicle and the first status information of the vehicle, the method further comprises:
obtaining third environment information around an autonomous vehicle and third status information of the autonomous vehicle;
extracting latency model data based on the third environment information and the third status information, wherein the latency model data comprises one or more of a quantity of threads of an application, periodic data of a thread, temporal probability distribution of thread execution, and a dependency relationship between thread data;
inputting the latency model data into a latency simulator to obtain a second latency;
determining, based on the second latency, a fourth latency optimization parameter that corresponds to the third environment information and the third status information; and
storing, in the mapping relationship, a correspondence between the third environment information, the third status information, and the fourth latency optimization parameter.

12. A data processing apparatus, comprising:
an obtaining unit, configured to obtain first environment information around a vehicle and first status information of the vehicle;
a sending unit, configured to send the first environment information and the first status information to a cloud server; and
a receiving unit, configured to receive first latency optimization configuration information sent by the cloud server, wherein the cloud server stores a mapping relationship between the first environment information, the first status information, and the first latency optimization configuration information, and the first latency optimization configuration information comprises a first latency optimization parameter for a processing unit in the vehicle to process data collected by a sensor; and
the processing unit is configured to process, based on the first latency optimization parameter, first data collected by the sensor.

13. The apparatus according to claim 12, wherein
the obtaining unit is further configured to obtain second environment information around the vehicle and second status information of the vehicle when a latency of processing, by the processing unit based on the first latency optimization parameter, the data collected by the sensor is greater than or equal to a latency threshold;
the sending unit is further configured to send the second environment information and the second status information to the cloud server;
the receiving unit is further configured to receive second latency optimization configuration information sent by the cloud server, wherein the cloud server stores a mapping relationship between the second environment information, the second status information, and the second latency optimization configuration information, and the second latency optimization configuration information comprises a second latency optimization parameter for the processing unit to process data collected by the sensor; and
the processing unit is further configured to process, based on the second latency optimization parameter, second data collected by the sensor.

14. The apparatus according to claim 12 or 13, wherein the processing unit comprises a primary processing unit and a secondary processing unit, and the processing unit is configured to:
deploy the first latency optimization parameter on the secondary processing unit; and
deploy the first latency optimization parameter on the primary processing unit when, in a first time period, a latency of processing the first data by the secondary processing unit based on the first latency optimization parameter is less than a latency of processing the first data by the primary processing unit.

15. The apparatus according to claim 14, wherein the apparatus further comprises:
a determining unit, configured to: before the processing unit deploys the first latency optimization parameter on the primary processing unit, determine that vehicle control instructions output by the secondary processing unit and the primary processing unit are the same in the first time period.

16. The apparatus according to any one of claims 12 to 15, wherein the first environment information comprises environment information around the vehicle at a plurality of future moments, and the first status information comprises status information of the vehicle at the plurality of future moments; and
the first latency configuration information comprises a latency optimization parameter for the processing unit to process, at the plurality of future moments, data collected by the sensor.

17. The apparatus according to any one of claims 12 to 16, wherein the first environment information comprises at least one of time, a geographical location, climate, and a road condition; and/or
the first status information comprises at least one of a hardware specification, a system status, and an autonomous driving status of the vehicle.

18. A data processing apparatus, comprising:
an obtaining unit, configured to obtain first environment information around a vehicle and first status information of the vehicle;
a determining unit, configured to determine first latency optimization configuration information based on the first environment information, the first status information, and a mapping relationship, wherein the mapping relationship comprises a mapping relationship between environment information, status information, and latency optimization configuration information, and the first latency optimization configuration information comprises a first latency optimization parameter for a processing unit in the vehicle to process data collected by a sensor; and
a sending unit, configured to send the first latency optimization configuration information to the vehicle.

19. The apparatus according to claim 18, wherein the first environment information comprises environment information around the vehicle at a plurality of future moments, and the first status information comprises status information of the vehicle at the plurality of future moments; and
the first latency optimization configuration information comprises a latency optimization parameter for processing, at the plurality of future moments, data collected by the sensor.

20. The apparatus according to claim 18 or 19, wherein the apparatus further comprises:
an information retrieval unit, configured to retrieve the mapping relationship based on the first environment information and the first status information and by using a hierarchical navigable small world HNSW algorithm, to obtain the first latency optimization configuration information.

21. The apparatus according to any one of claims 18 to 20, wherein the apparatus further comprises a parameter update unit and a storage unit;
the obtaining unit is further configured to obtain third environment information around an autonomous vehicle and third status information of the autonomous vehicle;
the determining unit is further configured to determine, based on a third latency optimization parameter set by an offline simulation system, the third environment information, and the third status information, a first latency of processing data collected by a sensor;
the parameter update unit is further configured to update the third latency optimization parameter based on the first latency, to obtain a fourth latency optimization parameter; and
the storage unit is further configured to store, in the mapping relationship, a correspondence between the third environment information, the third status information, and the fourth latency optimization parameter.

22. The apparatus according to any one of claims 18 to 20, wherein the apparatus further comprises a latency simulation unit and a storage unit;
the obtaining unit is further configured to obtain third environment information around an autonomous vehicle and third status information of the autonomous vehicle;
the determining unit is further configured to extract latency model data based on the third environment information and the third status information, wherein the latency model data comprises one or more of a quantity of threads of an application, periodic data of a thread, temporal probability distribution of thread execution, and a dependency relationship between thread data;
the latency simulation unit is configured to input the latency model data into a latency simulator to obtain a second latency;
the determining unit is further configured to determine, based on the second latency, a fourth latency optimization parameter that corresponds to the third environment information and the third status information; and
the storage unit is configured to store, in the mapping relationship, a correspondence between the third environment information, the third status information, and the fourth latency optimization parameter.

23. A data processing apparatus, comprising:
a memory, configured to store a computer program; and
a processor, configured to execute the computer program stored in the memory, to cause the apparatus to perform the method according to any one of claims 1 to 6.

24. A data processing apparatus, comprising:
a memory, configured to store a computer program; and
a processor, configured to execute the computer program stored in the memory, to cause the apparatus to perform the method according to any one of claims 7 to 11.

25. A vehicle, comprising the apparatus according to any one of claims 12 to 17 or the apparatus according to claim 23.

26. A server, comprising the apparatus according to any one of claims 18 to 22 or the apparatus according to claim 24.

27. A computer-readable storage medium, wherein the computer-readable storage medium stores a computer program; and when the computer program is executed by a computer, the method according to any one of claims 1 to 6 is implemented, or the method according to any one of claims 7 to 11 is implemented.
